# EUROPÄISCHE PATENTSCHRIFT

(11) **EP 0 762 837 B1**
(45) Veröffentlichungstag und Bekanntmachung des Hinweises auf die Patenterteilung: **27.02.2002**
(21) Anmeldenummer: 96909141.2
(22) Anmeldetag: 28.03.1996
(51) Int. Cl.: A23L 3/3463, A23L 3/3472

(54) **VERFAHREN ZUR HALTBARKEITSVERBESSERUNG UND/ODER STABILISIERUNG VON MIKROBIELL VERDERBLICHEN PRODUKTEN**
PROCESS FOR IMPROVING THE SHELF LIFE OF AND/OR STABILISING PRODUCTS WHICH CAN SPOIL UNDER THE ACTION OF MICROBES
PROCEDE POUR L'AMELIORATION DE LA CONSERVATION ET/OU LA STABILISATION DE PRODUITS ALTERABLES SOUS L'ACTION DE MICROBES

(30) Priorität: 31.03.1995 DE 19512147
(43) Veröffentlichungstag der Anmeldung: 19.03.1997
(60) Teilanmeldung: 01109105.5
(73) Patentinhaber: Schür, Jörg-Peter, Prof., 41844 Wegberg-Dalheim (DE)
(72) Erfinder: Schür, Jörg-Peter, Prof., 41844 Wegberg-Dalheim (DE)
(74) Vertreter: Helbing, Jörg, Dr. Dipl.-Chem.
(86) Internationale Anmeldenummer: EP9601364
(87) Internationale Veröffentlichungsnummer: WO9629895

(56) Entgegenhaltungen:
- EP-A- 0 557 946
- DE-A- 2 423 076
- DE-A- 3 138 277
- GB-A- 172 993
- GB-A- 1 060 447
- US-A- 4 446 161
- DATABASE WPI Section Ch, Week 9411 Derwent Publications Ltd., London, GB; Class D13, AN 94-088588 XP002007733 & JP,A,06 038 678 (OKUBO T) , 15.Februar 1994
- DATABASE WPI Section Ch, Week 9028 Derwent Publications Ltd., London, GB; Class C03, AN 90-213153 XP002007734 & JP,A,02 142 703 (KURITA WATER IND KK) , 31.Mai 1990
- DATABASE WPI Section Ch, Week 8302 Derwent Publications Ltd., London, GB; Class D13, AN 83-03563K XP002007735 & JP,A,57 194 775 (ASAMA KASEI KK) , 30.November 1982
- DATABASE WPI Section Ch, Week 8726 Derwent Publications Ltd., London, GB; Class D13, AN 87-181806 XP002007736 & JP,A,62 111 675 (SANRAKU OCEAN) , 22.Mai 1987

## Beschreibung

Die vorliegende Erfindung betrifft ein Verfahren zur Haltbarkeitsverbesserung und/oder Stabilisierung von mikrobiell verderblichen Produkten, ein Prozeßhilfsmittel zur Durchführung dieses Verfahrens sowie die Verwendung des Prozeßhilfsmittels zum Beaufschlagen von Oberflächen mikrobiell verderblicher Produkte und/oder deren Umgebung.

Industriell bearbeitete Nahrungs- und Futtermittel, Kosmetika, Pharmazeutika und andere für mikrobielle Verderbnis anfällige Produkte müssen eine gewisse, nicht zu kurze Zeit haltbar sein, um nach einem Transport und Vertrieb über die üblichen Wege unverdorben den Verbraucher zu erreichen. Der Verbraucher erwartet darüber hinaus, daß das erworbene Produkt auch nach dern Kauf nicht sofort verdirbt, sondern, je nach Produkt, einige Tage oder Wochen auf Vorrat gehalten werden kann.

Unbehandelt würden die meisten Nahrungs- und Futtermittel innerhalb weniger Tage verderben, da sich Pilze und/oder Bakterien ungehindert, allenfalls durch Kühlung beeinträchtigt, auf einem für sie idealen Nährboden vermehren könnten. Typische Beispiele sind der Verderb von Brot durch Schimmelpilze, z.B. Aspergillus niger, von Fleischprodukten (z.B. Wurst) durch Enterobakterien oder Lactobacillen, die Kontamination von Geflügel durch Salmonellen und vieles andere mehr. Da Pilze einschließlich Hefen bzw. deren Sporen, Grampositive und Gramnegative Bakterien überall vorhanden sind, wo nicht durch besondere, kostspielige und industriell aus ökonomischen Erwägungen nicht anwendbare Maßnahmen ein steriles Umfeld geschaffen wird, müssen geeignete Gegenmaßnahmen getroffen werden.

Herkömmlicherweise werden daher Nahrungs- und Futtermittel, Kosmetika, Pharmazeutika, Farben, Papier und Zellstoffe und andere verderbliche Produkte mit Konservierungsmitteln haltbar gemacht, die laut der Codex Alimentarius Liste der Food und Agriculture Organisation (FAO/WHO Food Standard Programme) in Division 3 Food Additives Preservatives 3.73 als "synthetische Konservierungsmittel" aufgeführt und meist in Form von chemischen Monosubstanzen oder deren Kombinationen eingesetzt werden. Solche synthetische Konservierungsmittel, deren Kombination mit "natürlichen" Konservierungsmittel sowie Kombinationen von natürlichen Konservierungsmitteln ist u. a. aus den folgenden Druckschriften bekannt:
DE-A-31 38 277 beschreibt die synergistische Kombination von Alkohol und Säure;
DE-A-41 29 531 beschreibt die synergistische Kombination von Zimtaldehyd und Zwiebel- oder Knoblauchextrakt;
GB-A-172 993 beschreibt die Verwendung von Alkoholen, Aldehyden, Terpenen zusammen mit aliphatischen Alkoholen;
GB-A-1 060 447 beschreibt die Raum- und Lebensmitteldesinfektion durch Mischung aus etherischen Ölen, Essig- oder Zitronensäure und Ethanol oder isopropanol;
US-Patent Nr. 4,446,161 beschreibt die Verwendung von Benzylalkohol eventuell mit weiteren Konservierungsmitteln;
EP-A-O 557 946 beschriebt die Verwendung von Extraktstoffen (Allylisothiocyanat) in Schmiermitteln oder Schneidölen;
JP-A-6038678 beschreibt die Verwendung von Allicin enthaltenden Gewürzen zur Konservierung von Reis (Gasphase);
JP-A-2132703 beschreibt die Verwendung von etherischen Ölen, die Citronellal, 1-Perillaldehyd und Myrtal enthalten, gegen Mikroorganismen und Pilzen;
JP-A-57194775 beschreibt die synergistische Lebensmittelkonservierung durch Zimtsäure in Kombination mit Säuren; und
JP-A-621111675 beschreibt die synergistische Mischung aus d-Limonen und Ethanol.

Die in der erwähnten Liste aufgeführten Konservierungsmittel sind bakteriostatisch und/oder fungistatisch wirksam und verbessern die Haltbarkeit wesentlich. Sie werden jedoch von vielen Verbrauchern abgelehnt, da ihre Auswirkungen auf die Gesundheit des Verbrauchers nicht bekannt sind, bzw. schädliche Einflüsse, insbesondere bei wiederholter Aufnahme über einen langen Zeitraum, nicht ausgeschlossen werden können.

Nachteilig bei diesen Konservierungsmitteln ist insbesondere, daß sie regelmäßig dem Nahrungsmittel zugegeben werden. Dadurch gelangen relativ hohe Konzentrationen dieser Mittel beim Verzehr auch in den menschlichen Körper. Die Folge sind die heute vielfach gehäuft auftretenden Reaktionen in Form allergischer Erkrankungen.

Eine Alternative zur Konservierung durch Zusatz von synthetischen Konservierungsmitteln ist die thermische Inaktivierung von Keimen, z.B. durch Pasteurisieren. Unter Pasteurisieren versteht man eine thermische Behandlung von 30 bis 120 Minuten Einwirkzeit bei 70 bis 85 °C.

Die Pasteurisierung verbessert die Haltbarkeit derart behandelter Produkte erheblich, ist jedoch technisch aufwendig und verbraucht sehr viel Energie. Die Lebensfähigkeit von Sporen wird darüber hinaus oft nicht oder nur sehr unvollständig beeinträchtigt. Eine Pasteurisierung ist außerdem für temperaturempfindliche Produkte nicht anwendbar oder führt zu einem nicht unerheblichen Qualitätsverlust, da soätestens durch das oftmals notwendige zweite Thermisieren (bis zu 85 °C) der "Frischegrad" des pasteurisierten Produktes nachläßt. Außerdem sind gerade wertvolle Bestandteile von Nahrungsmitteln, Kosmetika oder Pharmazeutika, z.B. Vitamine, Aminosäuren und viele pharmazeutische Wirkstoffe, thermolabil, so daß sich eine thermische Behandlung unter den üblichen Pasteurisierungsbedingungen verbietet.

Eine weitere Möglichkeit zur Verbesserung der Haltbarkeit ist es, das von Verderbnis bedrohte Produkt unter Stickstoff oder CO₂ luftdicht zu verpacken oder in Vakuumverpackungen bereitzustellen, wie es z.B. bei gemahlenem Kaffee gehandhabt wird. Diese Verfahren sind jedoch teuer und aufwendig und daher für viele Nahrungsmittel nicht anwendbar.

Aufgabe der Erfindung ist es daher, ein Verfahren zur Haltbarkeitsverbesserung und/oder Stabilisierung von mikrobiell verderblichen Produkten bereitzustellen, bei dem während des Prozesses zur Herstellung, Verarbeitung oder Verpackung der Produkte deren Oberflächen und/oder deren Umgebung, insbesondere die Umgebungsluft und/oder die Oberflächen der unmittelbar oder mittelbar mit den Produkten in Kontakt kommenden Geräte oder sonstigen Materialien mit einem oder mehreren Prozeßhilfsmitteln behandelt werden. Hierdurch soll insbesondere die Haltbarkeitsverbesserung und Stabilisierung von Nahrungs- und Futtermitteln, Kosmetika, Pharmazeutika und anderen, von Verderbnis bedrohten Produkten ermöglicht werden, ohne daß synthetische Konservierungsmittel in diese behandelten Stoffe eingemischt oder eine Pasteurisierung bei Temperaturen von 70 bis 85 °C angewendet werden muß. Ebenso soll eine Herabminderung der eingesetzten Mittel zur Haltbarkeitsverbesserung und Stabilisierung erreicht werden.

Die vorliegende Erfindung betrifft:
(I) ein Verfahren zur Haltbarkeitsverbesserung und/oder Stabilisierung von mikrobiell verderblichen Produkten, bei dem vor, nach oder während des Prozesses zur Herstellung, Verarbeitung oder Verpackung der Produkte deren Oberflächen und/oder deren Umgebung, insbesondere die Umgebungsluft und/oder die Oberflächen der unmittelbar oder mittelbar mit den Produkten in Kontakt kommenden Geräte oder sonstigen Materialien mit einem oder mehreren Prozesshiffsmitteln beaufschlagt werden, dadurch gekennzeichnet, dass das Prozesshilfsmittel eine mikrobizide Zusammensetzung ist, die Benzylalkohol und wenigstens einen weiteren mikrobizid wirkenden GRAS (Generally Recognized As Safe)-Aromastoff umfaßt, wobei der GRAS-Aromastoff ausgewählt ist aus:
   (1) Alkoholen, ausgewählt aus Acetoin, Ethanol, 1-Propanol, 2-Propanol, Propylenglykol, Glycerin, n-Butylalkohol, iso-Butylalkohol, Hexylalkohol, L-Menthol, Octylalkohol, Zimtalkohol, Heptylalkohol, 1-Pentanol, 3-Methyl-1-butanol, Anisalkohol, Citronellol, n-Decanol, Geraniol, 3-Hexenol, Linalool, Nerolidol, 2,6-Nonadien-1-ol, Nonylalkohol, Rhodinol, Terpineol, Borneol, Clineol, Cuminylalkohol, 10-Undecen-1-ol und 1-Hexadecanol;
   (2) Aldehyden, ausgewählt aus Acetaldehyd, Anisaldehyd, Benzaldehyd, Methyl-1-propanal, Citral, Citronellal, n-Decanal, Ethylvanillin, Fufural, Helioptropin, Heptanal, Hexanal, 2-Hexenal, 3-Phenyl-1-propanal, Dodecanal, Nonylaldehyd, Octylaldehyd, Phenylacetaldehyd, Propanal, Vanillin, Zimtaldehyd, Perillaaldehyd und Cuminaldehyd;
   (3) Phenolen, ausgewählt aus Thymol, Methyleugenol, Acetyleugenol, Safrol, Eugenol, Isoeugenol, Anethol, Phenol, Methylchavicol, Carvacrol, α-Bisabolol, Fornesol, Anisol und Propenylguaethol;
   (4) Acetaten, ausgewählt aus iso-Amylacetat, Benzylacetat, Benzylphenylacetat, n-Butylacetat, Cinnamylacetat, Citronenllylacetat, Ethylacetat, Eugenolacetat, Geranylacetat, Hexylacetat, Hydrocinnamylacetat, Linalylacetat, Octylacetat, Phenylethylacetat, Terpinylacetat, Triacetin, Kaliumacetat, Natriumacetat und Calciumacetat;
   (5) Säuren, ausgewählt aus Essigsäure, Aconitsäure, Adipinsäure, Ameisensäure, Apfelsäure, Capronsäure, 3-Phenyl-1-propionsäure, Nonansäure, Milchsäure, Phenoxyessigsäure, Phenylessigsäure, Valeriansäure, iso-Valeriansäure, Zimtsäure, Citronensäure, Mandelsäure, Weinsäure, Fumarsäure, Tanninsäure und/oder deren physiologisch verträglichen Salze;
   (6) Allicin;
   (7) Terpenen, ausgewählt aus Campher, Limonen und β-Caryophyllen;
   (8) Acetalen, ausgewählt aus Acetal, Acetaldehyddibutylacetal, Acetaldehyddipropylacetal, Acetaldehydphenethrylpropylacetal, Zimtaldehydethylenglycolacetal, Decanaldimethylacetal, Heptanaldimethylacetal, Heptanalglycerylacetal und Benzaldehydpropylenglykolacetal;
   (9) Polyphenole; und
   (10) etherischen Ölen und/oder alkoholischen, glykolischen oder durch CO₂-Hochdruckverfahren erhältliche Extrakte aus den im folgenden aufgeführten Pflanzen:
      (a) Öle bzw. Extrakte mit hohem Anteil an Alkoholen: Melisse, Koriander, Kardamon, Eukalyptus;
      (b) Öle bzw. Extrakte mit hohem Anteil an Aldehyden: Eukalyptus citriodora, Zimt, Zitrone, Lemongras, Melisse, Cintronella, Limette, Orange;
      (c) Öle bzw. Extrakte mit hohem Anteil an Phenolen: Oreganum, Thymian, Rosmarin, Orange, Nelke, Fenchel, Campher, Mandarine, Anis, Cascarille, Estragon und Piment;
      (d) Öle bzw. Extrakte mit hohem Anteil an Acetaten: Lavendel;
      (e) Öle bzw. Extrakte mit hohem Anteil an Estern: Senf, Zwiebel, Knoblauch;
      (f) Öle bzw. Extrakte mit hohem Anteil an Terpenen: Pfeffer, Pomeranze, Kümmel, Dill, Zitrone, Pfefferminz, Muskatnuß;
(II) eine mikrobizide Zusammensetzung, enthaltend Benzylalkohol und wenigstens einen weiteren mikrobiziden GRAS-Aromastoff, wie vorstehend in (I) definiert; und
(III) die Verwendung eines Prozesshilfsmittels, wie vorstehend in (I) definiert, zum Beaufschlagen von Oberflächen mikrobiell verderblicher Produkte und/oder deren Umgebung zum Zwecke des Aufstreichens, Schmierens, Emulgierens, Trennens, Reinigens, Sprühens, Vemebelns, Vergasens und Schneidens.

Die in den erfindungsgemäßen Prozeßhilfsmittein enthaltenen Aromastoffe sind ausschließlich natürliche oder naturidentische Aromastoffe, die gemäß FEMA als sicher (GRAS - Generally Recognized As Safe) anerkannt sind. Bei der erwähnten Liste handelt es sich um FEMA GRAS Flavour Substances Lists GRAS 3-16 Nr. 2001-3834 (Stand 1993), die natürliche und naturidentische Aromastoffe aufführt, die von der amerikanischen Gesundheitsbehörde FDA zur Verwendung in Nahrungsmitteln zugelassen sind (FDA Regulation 21 CFR 172.515 für naturidentische Aromastoffe (Synthetic Flavoring Substances und Adjuvants) und FDA Regulation 21 CFR 182.20 für natürliche Aromastoffe (Natural Flavoring Substances und Adjuvants). Die diese FDA-Normen erfüllenden Aromastoffe dürfen "quantum satis" eingesetzt werden, d.h. sie dürfen bis zu der Höchstkonzentration im Nahrungsmittel enthalten sein, in der sie noch keine geruchliche oder geschmackliche Beeinträchtigung des Nahrungsmittels, dem sie zugesetzt werden, bewirken. Die gemäß FEMA aufgeführten Aromastoffe decken sich weitgehend mit den in der entsprechenden europäischen Norm COE enthaltenen Stoffen.

Erfindungsgemäß dürfen außerdem die gemäß Artikel V European Community Directive Flavourings (22.06.88) als "NAT4" klassifizierten Aromastoffe verwendet werden, vorausgesetzt, sie gelten gemäß der zuvor erwähnten FEMA GRAS-Liste als sicher. NAT4-Substanzen sind Substanzen, die unter bestimmten Voraussetzungen als naturidentisch zu deklarieren sind, z.B., wenn diese Substanzen in Verbindung und als Bestandteil mit einem natürlichen oder naturidentischen Aromastoff eingesetzt werden.

Der besondere Vorteil der erfindungsgemäßen Prozeßhilfsmittel ist, daß es aufgrund seiner in der FEMA GRAS-Liste aufgeführten und von der US-Gesundheitsbehörde FDA, der wohl kritischsten Gesundheitsbehörde überhaupt, als unbedenklich anerkannten Bestandteile im "quantum satis"-Konzentrationsbereich ohne weiteres Nahrungsmitteln zugesetzt werden kann.

Ein weiterer besonderer Vorteil liegt darin, daß die Prozeßhilfsmittel den Geschmack und Geruch der behandelten Produkte nicht beeinflussen.

Die erfindungsgemäßen Prozeßhilfsmittel werden beispielsweise in Form von Schmiermitteln, Emulgier- und Reinigungsmitteln, Sprühmitteln, Vemebelungsmitteln, gasphasenaktiven Mitteln, Wärmeübertragungsmitteln sowie Schneid- oder Trennmitteln eingesetzt Ebenso können die Prozeßhilfsmittel als Zusätze zu den genannten Mitteln eingesetzt werden.

Es ist erfindungswesentlich, daß die Prozeßhilfsmittel nicht den Nahrungsmitteln beigegeben werden bzw. mit diesen vermischt werden. Vielmehr werden nur die Oberflächen bzw. Schnittflächen der Nahrungsmittel mit den Prozeßhilfsmitteln beaufschlagt. Dies kann dadurch geschehen, daß die Nahrungsmitteloberflächen bzw. Schnittflächen direkt mit den Prozeßhilfsmitteln beaufschlagt werden. Ebenso ist es aber auch möglich, die Oberflächen von Geräten, Produktionsmaschinen, Verpackungseinrichtungen, Transporteinrichtungen, Verpackungsmaterialien sowie die Umgebungsluft mit dem Prozeßhilfsmittel zu versetzen.

Es ist erfindungsgemäß überraschend, daß die mikrobizide Wirkung der Prozeßhilfsmittel bereits bei Anwendung geringer Konzentrationen auftritt. Nur 0,01 bis 5 g/kg, vorzugsweise 0,05 bis 1 g/kg Nahrungsmittel wird bei deren Beaufschlagung verwendet Bei dem Einsatz für die Umgebungsluft werden nur 0,001 bis 10 g/m³ Luft beispielsweise eingesetzt. Für die Oberflächen von Geräten werden sogar nur 0,000001g bis 0,1 g/cm² Oberfläche verwendet.

Bei Einhaltung dieser Konzentrationen liegen die in den Nahrungsmitteln nachweisbaren Mengen nur bei 0,001 Gew.-%. Hingegen werden nach dem Stand der Technik regelmäßig 0,1 bis 3 Gew.-% Konservierungsstoff in den Nahrungsmitteln vorhanden sein. Trotz dieser äußerst geringen Konzentrationen ist es erfindungsgemäß überraschend, daß gegenüber herkömmlich konservierten Nahrungsmitteln eine Haltbarkeitsverlängerung von bis zu 50 % erzielt werden kann.

Es ist besonders hervorzuheben und erstaunlich, daß bereits durch Prozeßhilfsmittel die indirekt auf Nahrungsmittel aufgebracht werden, bereits 0,001 Gew.-% ausreichen, um eine Haltbarkeitsstabilisierung bzw. -verbesserung bei erhöhter Produktqualität zu erreichen.

Diese Wirkung ist um so überraschender, als die mikrobizide Wirkungszeit der erfindungsgemäß eingesetzten Aromastoffe unter 24 Stunden, vorzugsweise unter 12 Stunden liegt. Ganz besonders bevorzugt ist es, Prozeßhilfsmittel und Konzentrationen so auszuwählen, daß die mikrobizide Wirkungszeit unter 1 Stunde, vorzugsweise unter 15 Minuten liegt

Im Gegensatz dazu ist es das Ziel der herkömmlichen Konservierungsstoffe, möglichst lange, d.h. über Wochen und Monate, in dem Lebensmittel wirksam zu sein. Trotz der sehr kurzen Wirkungszeiten der erfindungsgemäß eingesetzten Prozeßhilfsmittel ist die Haltbarkeit gegenüber den nach dem Stand der Technik mit herkömmlichen Konservierungsstoffen bzw. Konservierungsverfahren behandelten Lebensmitteln signifikant erhöht.

Das erfindungsgemäße Prozeßhilfsmittel umfaßt Aromastoffe, die ausgewählt sind aus der Gruppe der Alkohole, Aldehyde, Phenole, Acetate, Säuren, Ester, Terpene, Acetale und deren physiologisch verträglichen Salze, etherischen Ölen und Pflanzenextrakten.

Bevorzugte Ausführungsformen der erfindungsgemäßen Prozeßhilfsmittel umfassen ein oder mehrere Aromastoffe, die aus einer oder mehreren der folgenden Gruppen ausgewählt sind:

### I. Alkohole

Acetoin (Acetylmethylcarbinol), Ethylalkohol (Ethanol), Propylalkohol (1-Propanol), iso-Propylalkohol (2-Propanol, Isopropanol), Propylenglykol, Glycerin,

Benzylalkohol, n-Butylalkohol (n-Propylcarbinol), iso-Butylalkohol (2-Methyl-1-propanol), Hexylalkohol (Hexanol), L-Menthol, Octylalkohol (n-Octanol), Zimtalkohol (3-Phenyl-2-propen-1-ol), α-Heptylalkohol (Heptanol),

n-Amylalkohol (1-Pentanol), iso-Amylalkohol (3-Methyl-1-butanol), Anisalkohol (4-Methoxybenzylalkohol, p-Anisalkohol), Citronellol, n-Decylalkohol (n-Decanol), Geraniol, β-γ-Hexenol (3-Hexenol), Laurylalkohol (Dodecanol), Linalool, Nerolidol, Nonadienol (2,6-Nonadien-1-ol), Nonylalkohol (Nonanol-1), Rhodinol, Terpineol, Borneol, Clineol (Eucalyptol), Anisol, Cuminylalkohol (Cuminol), 10-Undecen-1-ol, 1-Hexadecanol.

### II. Aldehyde

Acetaldehyd, Anisaldehyd, Benzaldehyd, iso-Butylaldehyd (Methyl-1-propanal), Citral , Citronellal, n-Caprinaldehyd (n-Decanal), Ethylvanillin, Fufural, Heliotropin (Piperonal), Heptylaldehyd (Heptanal), Hexylaldehyd (Hexanal), 2-Hexenal (β-Propylacrolein), Hydrozimtaldehyd (3-Phenyl-1-propanal), Laurylaldehyd (Dodecanal), Nonylaldehyd (n-Nonanal), Octylaldehyd (n-Octanal), Phenylacetaldehyd (1-Oxo-2-phenylethan), Propionaldehyd (Propanal), Vanillin, Zimtaldehyd (3-Phenylpropenal), Perillaaldehyd, Cuminaldehyd.

### III. Phenole

Thymol, Methyleugenol, Acetyleugenol, Safrol, Eugenol, lsoeugenol, Anethol, Phenol, Methylchavicol (Estragol; 3-4-Methoxyphenyl-1-propen), Carvacrol, α-Bisabolol, Fomesol, Anisol (Methoxybenzol), Propenylguaethol (5-Propenyl-2-ethoxyphenol).

### IV. Acetate

iso-Amylacetat (3-Methyl-1-butylacetat), Benzylacetat, Benzylphenylacetat, n-Butylacetat, Cinnamylacetat (3-Phenylpropenylacetat), Citronellylacetat, Ethylacetat (Essigester), Eugenolacetat (Acetyleugenol), Geranylacetat, Hexylacetat (Hexanylethanoat), Hydrocinnamylacetat (3-Phenyl-propylacetat), Linalylacetat, Octylacetat, Phenylethylacetat, Terpinylacetat, Triacetin (Glyceryltriacetat), Kaliumacetat, Natriumacetat, Natriumdiacetat, Caiciumacetat.

### V. Säuren und/oder deren pnysiologisch verträgliche Salze

Essigsäure, Aconitsäure, Adipinsäure, Ameisensäure, Apfelsäure (1-Hydroxybernsteinsäure), Capronsäure, Hydrozimtsäure (3-Phenyl-1-propionsäure), Pelagonsäure (Nonansäure), Milchsäure (2-Hydroxypropionsäure), Phenoxyessigsäure (Glykolsäurephenylether), Phenylessigsäure (α-Toluolsäure), Valeriansäure (Pentansäure), iso-Valeriansäure (3-Methylbutansäure), Zimtsäure (3-Phenylpropensäure), Citronensäure, Mandelsäure (Hydroxyphenylessigsäure) Weinsäure (2,3-Dihydroxybutandisäure; 2,3-Dihydroxybemsteinsäure), Fumarsäure, Tanninsäure.

### Vl. Ester

Allicin.

### VII. Terpene

Campher, Limonen, β-Caryophyllen.

### VIII. Acetale

Acetal, Acetaldehydibutylacetal, Acetaldehyddipropylacetal, Acetaldehydphenethylpropylacetal, Zimtaldehydethylenglycolacetal, Decanaldimethylacetal, Heptanaldimethylacetal, Heptanalglycerylacetal, Benzaldehydpropylenglykolacetal.

### IX. Polyphenol

### X. Etherische Öle und/oder alkoholische, glykolische oder durch CO₂ -Hochdruckverfahren erhaltene Extrakte aus den im folgenden aufgeführten Pflanzen:

a) Öle bzw. Extrakte mit hohem Anteil an Alkoholen:
   Melisse, Koriander, Kardamon, Eukalyptus;
b) Öle bzw. Extrakte mit hohem Anteil an Aldehyden:
   Eukalyptus citriodora, Zimt, Zitrone, Lemongras, Melisse, Citronella, Limette, Orange;
c) Öle bzw. Extrakte mit hohem Anteil an Phenolen:
   Oreganum, Thymian, Rosmarin, Orange, Nelke, Fenchel, Campher,
   Mandarine, Anis, Cascarille, Estragon und Piment;
d) Öle bzw. Extrakte mit hohem Anteil an Acetaten:
   Lavendel;
e) Öle bzw. Ektrakte mit hohem Anteil an Estem:
   Senf, Zwiebel, Knoblauch;
f) Öle bzw. Extrakte mit hohem Anteil an Terpenen:
   Pfeffer, Pomeranze, Kümmel, Dill, Zitrone; Pfefferminz, Muskatnuß.

Sofern das Prozeßhilfsmittel nur einen der genannten Aromastoffe enthält, kommen Isopropanol und Ethanol nicht zum Einsatz. Überraschenderweise hat sich gezeigt, daß eine Kombination von mindestens zwei der angegebenen Aromastoffe eine weitaus größere Wirkung aufweist, als bei einer Einzelsubstanz.

Die meisten der in der GRAS FEMA-Liste aufgeführten Aromastoffe sind nicht wasserlöslich, d.h. hydrophob. Werden sie in hauptsächlich fetthaltigen Nahrungsmitteln eingesetzt, so sind sie aufgrund ihres lipophilen Charakters direkt ohne Lösungsmittel verwendbar. Der Anteil lipophiler Nahrungsmittel ist jedoch relativ gering. Um in den meistens hydrophilen Nahrungs- oder Futtermitteln, Kosmetika oder Pharmazeutika ihre Wirkung entfalten zu können, werden sie bevorzugt in Verbindung mit einem wasserlöslichen Lösungsvermittler eingesetzt. Um dem Anspruch dieser Erfindung, gesundheitlich unbedenkliche Prozeßhilfsmittel zur Verfügung zu stellen, gerecht zu werden, werden ausschließlich für Nahrungsmittel zugelassene Lösungsvermittler-Aromastoffe, z.B. Alkohole verwendet.

Die Anwendung der Prozeßhilfsmittel erfolgt unverdünnt und/oder in wasserlöslichen Verdünnungen mit Wasser und/oder lebensmittelzulässigen Lösemitteln (z.B. Alkohole) und/oder in fettlöslichen Verdünnungen mit Pflanzen- (Fett)Ölen.

In den erfindungsgemäßen Prozeßhilfsmitteln können z.B. gut wasserlösliche Alkohole, bevorzugt in Konzentrationen von 0,1 bis 99 Gew.-%, bezogen auf das Prozeßhilfsmittel, in Verbindung mit anderen Aromastoffen eingesetzt werden. Die erfindungsgemäßen Prozeßhilfsmittel enthalten vorzugsweise weniger als 50 Gew.-% Benzylalkohol oder eines Gemisches von Benzylalkohol mit Ethanol und/oder isopropanol. Besonders bevorzugt ist es, wenn der Anteil der genannten Alkohole bei weniger als 30 Gew.-%, insbesondere weniger als 20 Gew.-% liegt. Sofern Prozeßhilfsmittel eingesetzt werden, die Benzylalkohol und wenigstens einen weiteren Aromastoff enthalten, kann der Anteil an Benzylalkohol auch bei mehr als 50 Gew.-% liegen. Überraschenderweise haben die Prozeßhilfsmittel, die beispielsweise nur 20 Gew.-% Ethanol oder Isopropanol in Verbindung mit Aromaaldehyden und -phenolen in Konzentrationen im Promillbereich enthalten, eine sehr stark fungizide und bakterizide Wirkung; sogar Prozeßhilfsmittel, die 1 Gew.-% der genannten wasserlöslichen Alkohole in Verbindung mit weniger als 3 %o Aromaaldehyd und -phenol enthalten, weisen eine 70 bis 100 %-ige mikrobizide Wirkung auf.

Aus dem Voranstehenden ergibt sich, daß die erfindungsgemäßen Prozeßhilfsmittel überraschende mikrobizide Wirkungen auf das Umfeld der Produktion bzw. des Produktionsprozesses haben.

Bevorzugt ist dabei eine Verwendung der Prozeßhilfsmittel für die Produktion in Nahrungs- und Futtermitteln, Kosmetika, Pharmazeutika, Farben, Papier und/oder Zellstoffen.

In besonders bevorzugten Ausführungsformen werden die Prozeßhilfsmittel zur Haltbarkeitsverbesserung und Stabilisierung von aus der folgenden Gruppe ausgewählten Nahrungsmitteln verwendet:

Brot, Backwaren, Backmitteln, Backpulver, Puddingpulver, Getränken, diätetischen Lebensmitteln, Essenzen, Feinkost, Fisch und Fischprodukten, Kartoffeln und Produkten auf Kartoffefgrundlage, Gewürzen, Mehl, Margarine, Obst und Gemüse und Produkten auf Grundlage von Obst und Gemüse, Sauerkonserven, Stärkeprodukten, Süßwaren, Suppen, Teigwaren, Fleisch- und Fleischwaren, Milch-, Molkerei- und Käseprodukten, Geflügel und Geflügelprodukten, Ölen, Fetten und öl- oder fetthaltigen Produkten.

Das erfindungsgemäße Prozeßhilfsmittel wirkt im Umfeld des für Verderbnis anfälligen Produktes, beispielsweise eines Nahrungs- oder Futtermittels, z.B. auf Maschinenteilen, die in Kontakt mit dem zu be- oder verarbeitenden Produkt stehen, oder in der Luft. Durch den direkten Kontakt mit der Oberfläche des für Verderbnis anfälligen Produktes wirken sie auch dort, d.h. sie entfalten ihre Wirkung auf der Oberfläche oder bei Eindringen in das Produkt in diesem selbst.

Der besondere Vorteil des erfindungsgemäßen Prozeßhilfsmittels ist daher, daß es einerseits zuverlässig dekontaminiert, wobei sich seine Wirksamkeit gegen Gram-positive und Gram-negative Bakterien, Pilze einschließlich Hefen und auch Viren erwiesen hat, während es andererseits für den Konsumenten des Nahrungsmittels keine Gefahr darstellt, da es für diesen vollkommen unschädlich ist und keinerlei mikrobizide, technologische Nachwirkung im Nahrungsmittel besitzt, denn die mikrobizide Wirksamkeit bezieht sich auf das Produktionsumfeld, das durch die erfindungsgemäßen Maßnahmen von kontaminierenden Mikroorganismen befreit

Das erfindungsgemäße Prozeßhilfsmittel kann ein Schmiermittel sein, das gleichzeitig der Schmierung, der Dekontamination der geschmierten Teile und damit indirekt der Haltbarkeitsstabilisierung der Produkte, die mit diesen Teilen in Kontakt stehen, dient.

Erfindungsgemäß kann das Prozeßhilfsmittel weiterhin ein Emulgier-, Trenn- oder Reinigungsmittel sein. Solche Mittel dienen der Emulgierung und/oder Reinigung und damit auch der Dekontamination von Flächen, Gegenständen, Maschinen, Einrichtungen, Geräten, Schneidflächen oder -vorrichtungen, Transportvorrichtungen und ähnlichem. Es kann außerdem zum Dekontaminieren und Reinigen von Nahrungsmitteln, Rohstoffen, Kosmetika, Pharmazeutika, Farben, Papier, Zellstoff, Vieh, Geflügel, Fisch und Abfällen verwendet werden.

Das erfindungsgemäße Prozeßhilfsmittel kann darüber hinaus ein Sprühmittel sein. Ein solches Sprühmittel ermöglicht eine Feinverteilung der dekontaminierenden Wirkstoffe auf allen Maschinenteilen, Transportvorrichtungen, Schneidvorrichtungen, Arbeitsflächen usw. und kann gleichzeitig dazu führen, daß unmittelbar nach dem Schneid- bzw. Trennvorgang und/oder Verpackungs-Portionierungsvorgang verpackte Lebensmittel durch eingeschlossenes Sprühmittel in einem Klima mit dekontaminierenden und/oder haltbarkeitsstabilisierenden Eigenschaften aufbewahrt werden. Vemebel- bzw. versprühbare Ausführungsformen sind darüber hinaus wegen des vergleichsweise geringeren Bedarfs sehr kostengünstig.

Ebenso kann das Sprühmittel in und/oder auf Verpackungen, wie z.B. Tüten, Kartons oder ähnliches eingeblasen bzw. versprüht/vernebelt werden, um so das darin verpackte Produkt länger haltbar zu machen.

Die Sprühmittel dienen auch dazu, im Umfeld der Produktion (Umwelt, Kühlung, Lüftung, Frischluft) an hygienischen Schwachstellen (z.B. Kühlstrecken) vernebelt werden zu können, um somit die Keimzahl zu verringern, ohne daß das dort arbeitende Personal Schaden nimmt.

Ebenso können die Prozeßhilfsmittel zum Aufsprühen auf Nahrungsmittelflächen oder Schnittflächen eingesetzt werden, um die auf den Nahrungsmitteln befindlichen Verderbniserreger zu eliminieren oder zu reduzieren.

Femer können diese Sprühmitel in Transporteinrichtungen, Lager und Kühlräumen und ähnlichem eingesetzt werden.

In einer weiteren Ausführungsform ist das erfindungsgemäße Prozeßhilfsmittel ein Gasphasen-aktives Mittel, das der aktiven Dekontaminierung und/oder Desodorierung in der Gasphase in mehr oder weniger geschlossenen Systemen, wie Verpackungen, Abfallsystemen, Containersystemen, Transport- oder Lagerräumen und ähnlichem dient. Von der Wirkung des Gasphasenmittels profitieren sowohl das verpackte, im Container enthaltene, transportierte bzw. gelagerte Gut als auch die Luft und das jeweilige Umfeld.

Das erfindungsgemäße Prozeßhilfsmittel hat sich außerdem als ein gutes Wärmeübertragungsmittel erwiesen. Mit Wärmeübertragungsmittel sind Kühl-, Heiz- und Wärmemittel gemeint, die in umlaufenden Kreislaufsystemen von flüssigen Kühl-, Heiz- und Wärmesystemen als dekontaminierende Zusätze verwendet werden können. Sie werden dabei wäßrigen oder öligen Systemen zur Verhinderung eines Wachstums von Mikroorganismen in den Flüssigkeiten zugefügt, um z.B. bei Leckagen von Kühlungen eine Kontamination zu verhindem.

In einer besonders bevorzugten Ausführungsform ist das erfindungsgemäße Prozeßhilfsmittel ein Schneid- oder Trennmittel für Schneidmesser und/oder Schneidvorrichtungen aller Art und für alle verderblichen zu schneidenden Produkte, um die Kontaminierung der Schnittstellen zu verhindern.

In der Nahrungsmittelindustrie treten oft an den Schnitt- bzw. Trennstellen von Nahrungsmitteln Kontaminationen durch Gram-negative oder Gram-positive Erreger, Schimmelpilze, Hefen und andere mögliche Verderbniserreger auf, die die Haltbarkeit der geschnittenen bzw. getrennten Produkte z.T. erheblich beeinträchtigen können und damit sowohl gesundheitliche als auch ökonomische Schäden verursachen. Die Kontaminationen werden durch Rohstoffe, Produkt/Rohstoffreste, Personal durch Maschinenteile oder betriebsbedingte Prozesse oder durch die Luft eingetragen.

Herkömmlicherweise werden daher bis heute entweder die geschnittenen bzw. getrennten oder zu schneidenden bzw. zu trennenden Nahrungsmittel pasteurisiert bzw. technisch behandelt, um sie zu dekontaminieren und damit haltbarer zu machen, oder mit Konservierungsstoffen versetzt. Wie oben bereits erwähnt, ist jedoch eine thermische Behandlung nicht in jedem Fall möglich oder zulässig und führt unter Umständen zu einer Verminderung der Qualität des Produktes.

Eine flankierende Maßnahme zur Verbesserung der Haltbarkeit von Nahrungsmitteln ist die Reinigung oder gar Desinfektion des Umfeldes mit chemischen Desinfektionsmitteln, die der Biozidregelung unterliegt. Diese Stoffe sind mehr oder weniger giftig und sollen nicht in Nahrungsmittel übertragen werden. Die chemische Desinfektion ist jedoch eine diskontinuierliche Maßnahme, die pragmatisch nur zu bestimmten Produktionszeiten an Maschinenteilen und im Umfeld eingesetzt werden kann und nach deren Durchführung ein Nachspülen mit Wasser zur Entfemung der Restsubstanzen erforderlich ist. Dementsprechend ist die direkte permanente Elimination von Verderbniserregem nicht gewährleistet.

Im Stand der Technik ist daher versucht worden, die Maschinenhygiene durch bessere Reinigungsfähigkeit oder durch Installationen zur Erzeugung bzw. Erhaltung von reiner oder keimarmer bzw. keimfreier Luft zu optimieren. Erfahrungsgemäß hat dies jedoch nicht eine erhöhte Haltbarkeit von geschnittenen bzw. getrennten Nahrungsmitteln bewirkt oder ist ökonomisch nicht mehr vertretbar oder ist praktisch nicht sicher umzusetzen.

Ein Beispiel aus der Schnittbrotindustrie zeigt, daß durch das Schneiden bzw. Trennen von Brotsorten wie Ganzteig-, Vollkorn-, Weiß-, Misch- oder Toastbrot und anschließendes Verpacken die Haltbarkeit des Schnittbrotes im Gegensatz zu Ganzbrot erheblich reduziert wird. Sie liegt je nach Brotsorte zwischen 2 und 5 Tagen. Durch die heute meistens durchgeführte anschließende thermische Behandlung (Pasteurisieren in Öfen oder Mikrowellengeräten bei einer Kemtemperatur von 60 bis 90 °C) verlängert sich die Haltbarkeit von Brot normalerweise auf 4 bis ca. 20 Tage bei Verwendung normaler dampfdurchlässiger Polyethylentütenverpackungen. Andere Folien, z.B. aus Polypropylen, die jedoch wesentlich teurer sind, können wegen ihrer geringeren Dampfdurchlässigkeit eine längere Haltbarkeit erreichen. Verpackungen mit Polyesterkunststoffen und einer eingegebenen stickstoffhaltigen Atmosphäre führen zu noch längerer Haltbarkeit. All diese Maßnahmen sind jedoch entweder sehr kostspielig oder nur für teure Spezialprodukte und -märkte einsetzbar und führen z.T. zu erheblichen Qualitätsverlusten des Schnittbrotes, z.B. durch Kondensatbildung in der Brot-tüte, zu weiche Brotkonsistenz oder zu frühes Austrocknen. Diese Maßnahmen lösen alle nicht die eigentlichen Ursachen der Kontamination durch den Schneid- bzw. Trennprozeß, der sowohl die im Umfeld, wie auch die in Produkt oder an der Maschine vorhandenen möglichen Verderbniserreger durch die Schneidvorrichtung, z.B. die Schneidblätter, in das Nahrungsmittel einträgt bzw. darin verteilt.

Als Schneid- bzw. Trennhilfsmittel werden üblicherweise entweder mineralische Zusammensetzungen, die in vielen Ländem nicht mehr zugelassen sind, oder pflanzliche Schneidöle eingesetzt, die oft bereits schon in sich kontaminiert, d.h. bakteriell belastet sind. Siehe z.B. G. Schuster: Investigations on mould contamination of sliced bread, Bäcker & Konditor 27(11), S. 345-347; G. Spicher: Die Quellen der direkten Kontamination des Brotes mit Schimmelpilzen; Das Schneidöl als Faktor der Schimmelkontamination; Getreide, Mehl und Brot 32(4), S. 91-94.

Für ein Schneid- bzw. Trennmittel, das eine Dekontamination der mit dem Nahrungsmittel in Kontakt stehenden Maschinenteile während des Schneidprozesses erlaubt und dadurch eine verbesserte Haltbarkeit des Schnittgutes bewirkt, besteht daher ein dringender Bedarf, der durch das erfindungsgemäße Schneid- bzw. Trennmittel befriedigt wird.

Das erfindungsgemäße Schneid- oder Trennmittel ist überall einsetzbar, wo industriell gescnnitten oder getrennt wird und das Schnittgut einer Verderbnis durch Bakterien oder Pilze oder Kontamination durch Viren unterliegen kann. Dies trifft z.B. für Zellstoffe und Papier zu, besonders aber für Nahrungs- oder Futtermittel.

In einer bevorzugten Ausführungsform ist das erfindungsgemäße Prozeßhilfsmittel zum Schneiden oder Trennen von Brot, Backwaren, Fisch und Fischprodukten, Kartoffeln und Produkten auf Kartoffelgrundlage, Obst und Gemüse und Produkten auf Grundlage von Obst und Gemüse, Süßwaren, Stärkeprodukten, Teigwaren, Fleisch- und Fleischwaren, Käseprodukten, Geflügel und Geflügelprodukten geeignet.

Handelt es sich bei dem erfindungsgemäßen Prozeßhilfsmittel um ein Schneid-bzw. Trennmittel (z.B. zum Schneiden von Brot), so kann dieses auf üblicher Pflanzenöl-Fett-Wachsbasis unter Zusatz von mikrobiziden Prozeßhilfsmitteln auf der Basis von Aromastoffen bereitgestellt werden. Das Schneid- bzw. Trennmittel (z.B. für die Anwendung in der Fleischwaren-Industrie) kann vorzugsweise erfindungsgemäß ausschließlich aus einem oder mehreren Aromastoffen bestehen.

Den Pflanzenölen, -wachsen und -fetten können auch natürliche Emulgatoren, z.B. Lecithine in einer Konzentration von 1 bis 25 Gew.-%, beigegeben werden, wie es dem Stand der Technik entspricht. Beispielhafte Emulgatoren sind Lecithine, Zitronensäuremonoglyceride, Diacetylweinsäure, N-Acetylphosphatidylethanolamin, Phosphatidylinositol, Phosphatidylserin, Phosphatidsäuren, Phosptatidylcholin. Wird das erfindungsgemäße Schneid- bzw. Trennmittel jedoch als Emulsion auf wäßriger Basis bereitgestellt, werden Pflanzenöle, Pflanzenfette und Pflanzenwachse mit ungesättigten und gesättigten C₁₆ - C₁₈-Fettsäuren, die ebenfalls eine Viskosität von ca. 10 mPas (20 °C) bis ca. 500 mPas (20 °C) haben, verwendet.

Das beispielsweise aus den oben erwähnten Fettsäuren bzw. Ölen und Emulgatoren zusammengesetzte Schneid- und Trennmittel kann nach Mischen mit Wasser im Verhältnis von 1:1 bis 1:40 als Schneid- oder Trenneniulsion (-milch) angewendet werden.

In der Praxis wird das erfindungsgemäße Schneid- oder Trennmittel auf mindestens die in Kontakt mit dem Schnittgut stehenden Maschinenteile aufgebracht, um diese zu dekontaminieren. Die Mittel werden erfahrungsgemäß in Dosierungen von 1-20 g/kg Nahrungsmittel eingesetzt, wobei die Dosierung von der verwendeten Schneid- bzw. Trennvorrichtung und dem Schnittgut abhängig ist

Die Schneid- und Trennmittel werden meistens auf die Schneid- bzw. Trennvorrichtungen aufgebracht, z.B. beim Brotschneiden auf Kreistellerscheibenschneidmaschinen aufgesprüht, mit denen z.B. Schnittbrot anschließend geschnitten wird. Erfindungsgemäß werden dabei Teile der Schneidvorrichtungen, z.B. Kreistellermesser, Band-Slicer (rotierende Bandsägen), elektrische der mechanische Messer oder Messervorrichtungen, elektrische oder mechanische Sägen oder Sägevorrichtungen, elektrische oder mechanische Kettensägen oder Vorrichtungen benetzt, so daß das Schneid- bzw. Trennmittel auf dem entsprechenden Maschinenteil sowie auch auf der durch das Schneiden oder Trennen entstandenen Oberfläche dekontaminierend bzw. mikrobizid wirken kann.

Die vorteilhafte Wirkung der erfindungsgemäßen Schneid- und Trennmittel äußert sich in einer verlängerten Haltbarkeit des Schnittgutes, z.B. von Schnittbrot. Sie beruht nicht zuletzt darauf, daß das Schneid- und Trennmittel die Oberfiäche des Schnittgutes durchdringt und auch die tieferen Schichten des geschnittenen Nahrungsmittels dekontaminiert und zwar durch die im Schneidöl enthaltenen Aromastoffe.

Die hier beschriebenen Aromastoffe wirken darüber hinaus mikrobizid in der Dampfphase, da die meisten Aromastoffe leicht verdampfen. Sie wirken daher im sogenannten Umfeld des Nahrungsmittels, z.B. in der Verpackung des Nahrungsmittels, wenn dieses nach den Schneidprozeß z.B. in eine Folienverpackung verpackt wird.

Dieser Prozeß der Dekontamination des Schnittgutes nach dem eigentlichen Schneidvorgang kann durch eine schwache thermische Nachbehandlung des Nahrungsmittels ohne Qualitätsveriust desselben in der Verpackung unterstützt werden. So wird z.B. Brot nach dem Schneiden in Polyethylenfolien verpackt und anschließend z.B. mittels Mikrowelle innerhalb von 10 Sekunden bis 5 Minuten auf eine Kemtemperatur von zwischen 30 °C und 50 °C gebracht oder bis zu einer Stunde bei 30 °C bis 50 °C Kemtemperatur thermisch behandelt, wodurch der dekontaminierende Effekt des Schneid- bzw. Trennmittels verstärkt wird.

Der vorteilhafte Effekt der Schneid- bzw. Trennmittel kann z.T. erheblich erhöht werden, wenn die Auftrags- und Schneid- bzw. Trenntechniken so verbessert oder neu entwickelt werden, daß eine intensive Benetzung des Nahrungsmittels mit Schneid- bzw. Trennmittel erfolgt. So wurde z.B. in Versuchen zum Brotschneiden das Kreistellerschneidblatt mit separaten Nutführungen und Rillen versehen, so daß ein gründlicher und intensiver Auftrag von Schneid- bzw. Trennmittel möglich war.

Die folgenden Beispiele erläutern die Erfindung.

### Beispiele 1- 5

Die Effektivität von Prozeßhilfsmitteln wurde in verschiedenen Versuchen getestet. Hierbei zeigt sich, daß diese eine Verbesserung der Haltbarkeit und der Stabilisierung überraschenderweise bewirken, wenn sie als Schneidmittel, als Sprühmittel, als Reinigungsmittel, als Trennmittel eingesetzt werden. Die Anzahl der verderbniserregenden Keime auf Schneidflächen, Transportflächen oder Schnittflächen konnte so stark reduziert werden. Gleichzeitig wurde die Haltbarkeit z.B. von Wurst um 30 % gegenüber einer herkömmlichen Konservierung verlängert.

Am Beispiel von Brot wird durch Besprühen von Brotlaiben und Scheiben des Brotes mit Schneidmittel durch Aufsprühen des Prozeßhilfsmittels auf die Flächen der Schneidmesser die Haltbarkeit signifikant verbessert.

Am Beispiel von Backwaren konnte nachgewiesen werden, daß beim Vernebeln eines Prozeßhilfsmittels der Gehalt an Schimmelpilzen pro m² Luft signifikant reduziert werden konnte. Die Haltbarkeit wurde ohne zusätzliche Zugabe von Konservierungsmitteln in dem Brot bzw. den Backwaren erheblich verbessert.

### Beispiel 1

Einsatz eines Prozeßhilfsmittels als Schneidmittel für Schneidmesser und als Sprühmittel für Transport- und Förderbänder in der Fleischerei.

### Verfahrensbeschreibung:

a)-c) untersucht die Keimzahl von Säurebildnem wie Lactobacillen. Zur Bestimmung dieser Keinzahl wurde die übliche Labortechnik als Verdünnungsreihe und Gußagar angewendet.
   Verwendeter Nährboden MRS agar (OXOID)
d) Zur Bestimmung der keimreduzierenden Wirkung auf der Oberfläche von Wurst wurde das Abklatschverfahren angewendet.
   Die Keimzahl wurde vorher, nach 10 Minuten Einwirkzeit (nach Besprühung mit HIQProSlice, ¹⁾ eingetragene Marke der Schür in Process GmbH), nach Abkühlung und vor dem Verpacken bestimmt.
   Nährboden für Gesamtkeimzahl: RODAC mit TSA, TW 80 und Lecithin. Oberfläche: 25 cm²

¹⁾ HIQ ProSlice ist eine Firmenbezeichnung für eine Zusammensetzung umfassend 0,5-20% Benzylalkohol und 0,1-30% Milchsäure sowie ein geeignetes Lösungsmittel.

### Probebeschreibung:

Als Untersuchungsobjekt wurde Rostbratwurst gewählt.
Das Produkt hat eine Haltbarkeit von 2-3 Wochen.

Rostbratwurst wird wie folgt produziert
Fleisch und Fett werden im Cutter geschnitten und mit Zutaten vermischt. Nach Einfüllen in den Darm wird die Wurst bei 75 °C gebrüht. Nach Abkühlung werden die Produkte zu je 3 Stück vakuumverpackt.

| Probenr.: | Beschreibung Probe |
|---|---|
| 1 | Rostbratwurst Nullprobe |
| 2 | Nullprobe + ProSlice auf Außenhaut (1 g/1000 g Wurst) |
| 3 | Anlage mit ProSlice dekontaminiert |
| 4 | wie 3 + ProSlice auf Außenhaut (1 g/1000 g Wurst) |
| 5 | wie 3 + 1 % ProSlice als Additiv |
| 6 | wie 5 + ProSlice auf Außenhaut (1g/1000 g Wurst) |
| 7 | wie 3 + 3 % ProSlice als Additiv |
| 8 | wie 7 + ProSlice auf Außenhaut (1g/1000 g Wurst) |

### Ergebnisse:

a) Die Haltbarkeit eines Produkts, wenn angewendet als Additiv.

| Keimzahl Lactobacillen /g | | | |
|---|---|---|---|
| Probennr. | Tag 1 | Tag 7 | Tag 14 |
| 1 | 100 | 31.000 | 2.100.000 |
| 5 | 200 | 26.000 | 5.000.000 |
| 7 | 100 | 40.000 | 5.000.000 |

b) Die Haltbarkeit eines Produkts, wenn angewendet als Sprühmittel auf der Außenhaut des Produkts

| Keimzahl Lactobacillen/g | | | |
|---|---|---|---|
| Probennr. | Tag 1 | Tag 7 | Tag 14 |
| 1 | 100 | 31.000 | 2.100.000 |
| 4 | <100 | 2.700 | 450.000 |
| 6 | <100 | 19.000 | 1.100.000 |
| 8 | < 100 | 18.000 | 1.200.000 |

c) Die Haltbarkeit eines Produkts, wenn angewendet als Sprühmittel auf Oberflächen direkt im Kontakt mit dem Produkt.

| Probennr. | Tag 1 | Tag 7 | Tag 14 |
|---|---|---|---|
| 1 | 100 | 31.000 | 2.100.000 |
| 3 | 200 | 5.500 | 900.000 |

d) Die Keimzahl nach Besprühung auf der Außenseite des Produkts. Vorher (Probe 1)

| Probennr. | Gesamtkeimzahl/2 5 cm² vorher | Gesamtkeimzahl/2 5 cm² nach 10 Minuten Einwirkzeit |
|---|---|---|
| 1 | 120 | 95 |
| 2 | 65 | Kein Wachstum |
| 4 | 110 | Kein Wachstum |
| 6 | Rasenwuchs | Kein Wachstum |
| 8 | 18 | Kein Wachstum |

### Kommentar zu:

a) Die Haltbarkeit eines Produkts, wenn angewendet als Additiv.
   Die Tabelle zeigt, daß das Zufügen von HIQProSlice auch in erheblichen Mengen keinen Einfluß auf die Haltbarkeitsverlängerung hat. Das HIQProSlice hat keine konservierende Wirkung, wenn es als Additiv zugefügt wird.
b) Die Haltbarkeit eines Produkts, wenn angewendet als Sprühmittel an der Außenseite des Produkts.
   Die Tabelle zeigt, daß durch das Besprühen der Wurst mit 1 g pro 1000 g Produkt sich eine Haltbarkeitsverbesserung ergibt.
c) Die Haltbarkeit eines Produkts, wenn angewendet als Sprühmittel auf Oberflächen direkt im Kontakt mit dem Produkt.
   Die Tabelle zeigt, daß durch das Besprühen der Oberflächen und Geräte sich eine Haltsbarkeitsverbesserung ergibt.
d) Die Keimzahl nach Besprühung auf der Außenseite des Produkts.
   Durch das Besprühen der Wurstoberfläche ergibt sich eine Keimzahlreduzierung von RF log von mindestens 2 innerhalb 10 Minuten.

### Beispiel 2

Technologische (Nach-)Wirkung von Prozeßhilfsmitteln zum Sprühen am Beispiel eines Sprühmittels/Schneidmittels zum Schneiden und Besprühen der Transportvorrichtungen bei der Produktion/Zerlegung von Geflügelfleisch.

Ergebnis der Prüfung von HIQ Pro Chick¹⁾ (1 %-ig) auf die Aufhebung eines bakteriziden/bakteriostatischen Effekts (syn. mikrobiologisch-technologische Nachwirkung) nach Kontakt mit Geflügelprotein in Anlehnung an die Methode B 4.2.3. BGA nach E. Petermann und G. Cerny.
- Untersuchungsmaterial:: 1 Muster HIQ Pro Chick-Konzentrat, eingetragene Marke der Firma Schür in Process GmbH, Mönchengladbach
- Untersuchungsmethode:: B IV 4.2.3. BGA, Mikrobiologisches Meßverfahren; Agar-Diffusionstest
- Durchführung:: Vom eingesandten Material wurde zunächst eine 1 %-ige Verdünnung in einem Lysat aus einem Hähnchenbrustfilet, Fa. Wiesenhof, HKL-A mit einem Proteingehalt von 30 g/l (Biurett-Methode) hergestellt. Diese Mischung wurde für 18 Std. bei 6 °C inkubiert. Am nächsten Tag wurde diese Mischung mit 10 µl, 50 µl und 100 µl in einen CASO-Agar mit pH 7,0 pipettiert, in den Sporen von Bacillus subtilis BGA-Stamm (DSM 614) eingegossen waren; Ansatz je 3 Vertiefungen.
Nach einer 2-stündigen Vordiffusion bei 4 °C wurden die Platten mit den Bacillus-Sporen 3 Tage bei 30 °C bebrütet und auf Hemmhöfen kontrolliert. Als positive Kontrolle diente für den Bacillusstamm ein Antibiotikumplättchen - als Wachstumskontrolle wurde ein lediglich mit Sporen versetzter Agar benutzt.
Zusätzlich wurde das HIQ Pro Chick in obigen Mengen sowohl als konzentrierte, 10 %-ige und 1 %-ige Lösung ohne Proteinkontakt auf Hemmwirkung gegen den Bacillus subtilis untersucht. Dieser Ansatz wurde an 2 verschiedenen Tagen durchgeführt.
- Untersuchungsergebnis:: Positive Kontrolle: Hemmhof von 40 mm um das Antibiotikum
Wachstumskontrolle: Gutes Wachstum von Bacillus subtilis BGA
- Untersuchungsprobe:: 1 %-iges HIQ Pro Chick in Protein: Keine Hemmhöfe bei 10,50 und 100 µl Probenmenge.
HIQ Pro Chick ohne Protein: Keine Hemmhöfe bei 10, 50 und 100 µl Probenmenge und 100 %-iger, 10 %-iger und 1 %-iger Lösung.

¹⁾ HIQ ProChich ist eine Firmenbezeichnung für eine Zusammensetzung umfassend 0,5-20% Benzylalkohol und 0,5-10% Tanninsäure sowie ein geeignetes Lösungsmittel.

### Beurteilung nach Methode B IV 4.2.3. BGA:

Gemäß dem hier eingesetzten Testverfahren nach BGA (BgVV) läßt sich für die Probe HIQ Pro Chick in allen Versuchsansätzen selbst in 10-facher Dosierung kein bakterizider oder bakteriostatischer Effekt, d.h. auch keine mikrobiologischtechnologische Nachwirkung mit Hühnermuskelfleisch -Ektrakt nachweisen.

### Beispiel 3

Prozeßhilfsmittel zum Besprühen von Schneidmessem als Schneidmittel und zum Besprühen von Transportvorrichtungen am Beispiel von Schnittwurst unter Berücksichtigung der Reduzierung von Verderbniserregem (Enterobacter/Lactobacillen) auf Schneidmessern, Transportvorrichtung und Wurstschnittflächen und Verbesserung/Verlängerung der Haltbarkeit.

### 2a. Standard-Verfahren

| Probennr.: | Probenbeschreibung | Befund Gesamtkeimzahl/7 cm² | Bemerkung |
|---|---|---|---|
| 1 | Band | 67 | |
| 2 | Band | ± 100 | |
| 3 | Band | ± 100 | |
| 4 | Band | 51 | 20 Schimmel |
| 5 | Wurstunterstützer | 8 | |
| 6 | Wurstunterstützer | 0 | |
| 7 | Messer (Außenseite) | 39 | |
| 8 | Messer (Innenseite) | 28 | |
| 9 | Messerkasten (Innenseite) | massenhaft | |

### 2b. Nach Behandlung von Schneid- und Transportflächen

| Probennr.: | Probenbeschreibung | Befund Gesamtkeimzahl/7 cm² |
|---|---|---|
| 18 | Band nach Einreiben mit Papier (13:12h) | 1 |
| 19 | Band nach Einreiben mit Papier (13:12h) | 0 |
| 20 | Band nach Einreiben mit Papier (13:22h) | 0 |
| 21 | Band nach Einreiben mit Papier (13:20h) | 1 |
| 22 | Band nach Einreiben mit Papier (13:30h) | 18 |
| 23 | Band nach Einreiben mit Papier (13:30h) | 4 |
| 24 | Band während der kontinuierlichen Besprühung | 0 |
| 25 | Band während der kontinuierlichen Besprühung | 0 |
| 26 | Geschnittene Wurst (oben) | 1 |
| 27 | Geschnittene Wurst (unten) | 0 |

### 2c. Haltbarkeitsüberprüfung verpackter Wurst

### Probenbezeichnung:

- V =: Probe vor der Behandlung
- M =: Probe nach dem Einreiben
- R =: Probe nach dem Besprühen ausschließlich nur des Bandes
- MB =: Probe während der kontinuierlichen Besprühung des Bandes und des Messers

| **Datum** | **Probe** | **GKZ** | **Entero** | **Lacto** | **Staph.** | **Hefe** | **SchiPi.** | **Sp.Bild** |
|---|---|---|---|---|---|---|---|---|
| Woche 1 | V | <10² | <10 | <10² | <10² | <10² | <10² | <10² |
| | M | <10² | <10 | <10² | <10² | <10² | <10² | <10² |
| | R | <10² | <10 | <10² | <10² | <10² | <10² | <10² |
| | MB | <10² | <10 | <10² | <10² | <10² | <10² | <10² |

| **Datum** | **Probe** | **GKZ** | **Entero** | **Lacto** | **Staph.** | **Hefe** | **SchiPi.** | **Sp.Bild** |
|---|---|---|---|---|---|---|---|---|
| Woche 2 | V | 7,2*10³ | <10 | >3*10⁶ | <10 | <10 | <10 | <10² |
| | M | 3,2*10² | <10 | 2*10² | <10 | <10 | <10 | <10² |
| | R | 1,4*10³ | <10 | 1,5*10³ | <10 | <10 | <10 | <10² |
| | MB | 1,8*10⁴ | <10 | 1,7*10⁴ | <10 | <10 | <10 | <10² |

| **Datum** | **Probe** | **GKZ** | **Entero** | **Lacto** | **Staph.** | **Hefe** | **SchiPi.** | **Sp.Bild** |
|---|---|---|---|---|---|---|---|---|
| Woche 3 | V | 4,2*10⁵ | 20 | 2,9*10⁸ | <10² | <10² | <10² | <10² |
| | M | 2,4*10⁴ | 60 | 6,3*10⁴ | <10² | <10² | <10² | <10² |
| | R | 6,3*10⁵ | 1,2*10⁴ | 3,0*10⁵ | <10² | <10² | <10² | <10² |
| | MB | 4,0*10⁵ | 90 | 6,0*10⁵ | <10² | <10² | <10² | <10² |

| **Datum** | **Probe** | **GKZ** | **Entero** | **Lacto** | **Staph.** | **Hefe** | **SchiPi.** | **Sp.Bild** |
|---|---|---|---|---|---|---|---|---|
| Woche 4 | V | 7,0*10⁷ | <10 | 2,9*10⁸ | <10² | <10² | <10² | <10² |
| | M | 8,0*10⁷ | <10 | 6,3*10⁴ | <10² | 200 | <10² | <10² |
| | R | 1,8*10⁷ | <10 | 3,0*10⁵ | <10² | <10² | <10² | <10² |
| | MB | 10⁴ | <10 | 6,0*10⁵ | <10² | <10² | <10² | <10² |

| **Datum** | **Probe** | **GKZ** | **Entero** | **Lacto** | **Staph.** | **Hefe** | **SchiPi.** | **Sp.Bild** |
|---|---|---|---|---|---|---|---|---|
| Woche 5 | V | 3,5*10⁸ | <10 | 6,6*10⁸ | <10² | <10² | <10² | 10 |
| | M | 5,0*10⁵ | <10 | 7,0*10⁶ | <10² | 200 | <10² | 250 |
| | R | 10⁴ | <10 | 10⁵ | <10² | <10² | <10² | 50 |
| | MB | 2*10² | <10 | <10² | <10² | <10² | <10² | 30 |

### Resultat:

Bei der Produktion von Schnittwurst verlängert sich indirekt deren Haltbarkeit durch kontinuierliche Anwendung der Prozeßhilfsmittel auf Schneidmesser und Transportvorrichtung, da die Anzahl der auf den Vorrichtungen entstehenden Verderbniserregem erheblich reduziert wird.

Die Haltbarkeit von Wurst wird nach den besagten Versuchsergebnissen durch Einsatz des Schneidmittels, welches auf die Schneidvorrichtungen aufgebracht wird, signifikant verbessert Zugleich kommt es zu einer überraschenden guten Reinigung der Schneidflächen, der Schneidvorrichtungen. Außerdem wird die Schneidfähigkeit der Wurst verbessert. Trotz der hohen Verdünnung der eingesetzten Stoffe wird die Haltbarkeit erheblich verbessert. Mit Pflanzenölen lassen sich hervorragende Resultate in Verdünnung von 1:10 bis 1:100 erreichen.

### Beispiel 4

Prozeßhilfsmittel zum Schneiden (Schneidöl) durch Besprühen auf Schneidmesser (Bandslicer), Kreistellerschneidmaschine und Sprühmittel zum Besprühen der Oberflächen des Nahrungsmittels am Beispiel von Toast-Brot unter Berücksichtigung der Reduzierung von Verderbniserregern auf den Maschinenteilen und Brot- und/oder Schnittflächen (Schimmelpilze/Aspergillus niger) zur gleichzeitigen Verbesserung/Verlängerung der Haltbarkeit.

### 3a. Haltbarkeitsauswertung - Einsatz von Sprühmittel und Schneidöladditiv (genannt Jet und Cut)l

| **Probenkodierung** | **Proben anzahl** | **Anzahl Ausfälle in Tagen** | | | | | | | | | | | | | | | | | | | |
|---|---|---|---|---|---|---|---|---|---|---|---|---|---|---|---|---|---|---|---|---|---|
| | | **5** | **6** | **7** | **8** | **9** | **10** | **11** | **12** | **13** | **14** | **15** | **16** | **17** | **18** | **19** | **20** | **21** | **22** | **23** | **24** |
| V1-1,8 g Jet / Toast | 70 | 0 | 0 | 0 | 0 | 0 | 0 | 0 | 0 | 0 | 0 | 0 | 0 | 0 | 0 | 0 | 0 | 0 | 1 | 0 | 2 |
| | | | | | | | | | | | | | | | | | | | GU | | GU |
| V2-1,0 g Jet / Toast | 70 | 0 | 0 | 0 | 0 | 0 | 0 | 0 | 0 | 0 | 0 | 0 | 0 | 0 | 0 | 0 | 0 | 0 | 0 | 1 | 3 |
| | | | | | | | | | | | | | | | | | | | | GV | GV |
| V3 - 0,6 g Jet/ Toast | 70 | 0 | 0 | 0 | 0 | 0 | 0 | 0 | 0 | 0 | 0 | 0 | 0 | 0 | 0 | 0 | 0 | 0 | 0 | 2 | 1 |
| | | | | | | | | | | | | | | | | | | | | GU | GU |
| V4 - nur Messer mit Cut | 70 | 0 | 0 | 0 | 0 | 0 | 0 | 0 | 0 | 0 | 0 | 0 | 0 | 0 | 0 | 0 | 0 | 1 | 2 | 4 | X |
| | | | | | | | | | | | | | | | | | | G V | GV | GV | |
| V5 - Standard o. Past. | 70 | 0 | 0 | 0 | 0 | 1 | 3 | 5 | 10 | 16 | X | | | | | | | | | | |
| | | | | | | GV | GV | GV | GV | GV | | | | | | | | | | | |
| V6 - Standard | 70 | 0 | 0 | 0 | 0 | 0 | 0 | 0 | 0 | 0 | 0 | 2 | 4 | 3 | 4 | 5 | 7 | X | | | |
| Legende: Schimmelfarbe: G=Grün, GE=Gelb, S=Schwarz, W=Weiß, K=Kreide Schimmeibefundstelle O=Oben, U=Unten, S=Seite, M=Schnittfläche V=Verschiedene Stellen | | | | | | | | | | | | | | | | | | | | | |

### 3b. Umfeldhygiene

| Probennr.: | Beschreibung | Zeit | Bakt./m³ | Schimmel |
|---|---|---|---|---|
| 1 | Eingang Bandslicer | 15:15h | 260 | 50 |
| 2 | Ausgang Slicer | 15:25h | 225 | 25 |
| 3 | Kühlturm Raummitte | 15:30h | 13 | < 13 |
| 4 | Verpackungsmaschine | 15:30h | 400 | 62 |
| 5 | CO²-Injektor | 15:40h | 750 | 88 |
| 6 | Verpackung | 16:00h | 63 | 25 |

### Resultat:

Bei der Produktion von Schnittbrot verlängert sich indirekt dessen Haltbarkeit durch kontinuierliche Anwendung der Prozeßhilfsmittel zum Sprühen auf Brotoberflächen und Schneiden des Brotes mit Schneidöl (Zusatz des Prozeßhilfsmittel - schneidölanteilig zum normalen Schneidöl), da die Anzahl der Schimmelpilze (Verderbniserreger) sich erheblich reduzieren. Eine chemische Konservierung oder Pasteurisierung ist nicht mehr notwenidg.

### Beispiel 5

Prozeßhilfsmittel zum Vernebeln in der Luft unter Berücksichtigung der Reduzierung der Verderbniserreger in der Luft (Schimmelpilz/Aspergillus niger) und Verhinderung der Resedimentierung auf Backwaren am Beispiel von Backwaren mit dem Resultat der Verbesserung/Verlängerung der Haltbarkeit.

### 4a. Luftkeimzahlmessungen vor der Behandlung

Biotest-Airsampler, jeweils 2 Min. (80 l Luft)

| Probennr.: | Probenbeschreibung | Bakterien | Schimmel |
|---|---|---|---|
| 1 | Kühlraum vor Ver-nebelung zwischen den Kühltürmen | 38 | |
| 2 | Treppenbereich vor Einlauf in den Kühlraum | 1.500 | |
| 3 | Ausgang Kühlraum zur Verpackung | 2.500 | 625 |
| 4 | 1.Kühlturm vor dem Luftstrom der Kühl-anlage - vor Vemebelung 10:00h | 75 | 13 |
| 5 | 1.Kühlturm vor dem Luftstrom der Kühl-anlage direkt vor Vemebelung 11:30h | 80 | 140 |

### 4b. Luftkeimzahlmessungen während/nach der Behandlung

| Probennr.: | Probenbeschreibung | Bakterien | Schimmel |
|---|---|---|---|
| 6 | 1.Kühlturm vor dem Luftstrom der Kühl-anlage-während der Vernebelung 11:45h | 15 | 13 |
| 7 | 1.Kühlturm vor dem Luftstrom der Kühl-anlage-am Ende der Vemebelung 13:00h | 0 | 0 |
| 8 | 1.Kühlturm vor dem Luftstrom der Kühl-anlage-nach der Ver-nebelung 14:00h | 0 | 0 |

### 4c. Haltbarkeitsauswertung nach Einsatz von Vemebelungsmittel (genannt FOG)

| **Probenkodierung** | **Probenanzahl** | **Anzahl Ausfälle in Tagen** | | | | | | | | | | | | | | | | | | |
|---|---|---|---|---|---|---|---|---|---|---|---|---|---|---|---|---|---|---|---|---|
| | | **10** | **11** | **12** | **13** | **14** | **15** | **16** | **17** | **18** | **19** | **20** | **21** | **22** | **23** | **24** | **25** | **26** | **27** | **28** |
| 532 mit Additiv | 16 | 0 | 0 | 0 | 0 | 0 | 0 | 0 | 0 | 0 | 2 | 2 | 3 | 1 | 2 | 0 | 1 | 1 | 2 | 3 |
| | | | | | | | | | | | GU | GU | GU | GU | GU | | GU | GU | GU | GV |
| 505 mit Additiv | 16 | 0 | 0 | 0 | 0 | 0 | 0 | 0 | 0 | 0 | 0 | 0 | 1 | 1 | 1 | 0 | 1 | 1 | 1 | 2 |
| | | | | | | | | | | | | | GU | SO | GU | | GU | GU | GU | GV |
| 505 mit Fog nach 60 Min. | 16 | 0 | 0 | 0 | 0 | 0 | 0 | 0 | 0 | 0 | 0 | 0 | 0 | 0 | 0 | 0 | 0 | 1 | 2 | 8 |
| | | | | | | | | | | | | | | | | | | GU | GU | GU |
| 505 mit Fog nach 120 Min. | 16 | 0 | 0 | 0 | 0 | 0 | 0 | 0 | 0 | 0 | 0 | 0 | 0 | 0 | 0 | 0 | 0 | 0 | 1 | 4 |
| | | | | | | | | | | | | | | | | | | | GU | GU |
| 505 mit Fog nach 180 Min. | 16 | 0 | 0 | 0 | 0 | 0 | 0 | 0 | 0 | 0 | 0 | 0 | 0 | 0 | 0 | 0 | 0 | 0 | 0 | 2 |
| | | | | | | | | | | | | | | | | | | | | GU |
| 505 mit Fog nach 240 Min. | 16 | 0 | 0 | 0 | 0 | 0 | 0 | 0 | 0 | 0 | 0 | 0 | 0 | 0 | 0 | 0 | 0 | 0 | 0 | 0 |
| Legende: Schimmelfarbe: G=Grün, GE=Gelb, S=Schwarz, W=Weiß, K=Kreide Schimmelbefundstelle O=Oben, U=Unten, S=Seite, M=Schnittfläche V=Verschiedene Stellen Aditiv=Koservierungsmittel Fog=ohne Konservierungsmittel mit Einsatz des Vemebelungsmittels in der Luft | | | | | | | | | | | | | | | | | | | | |

### Resultat:

Bei der Produktion von Backwaren verlängert sich indirekt dessen Haltbarkeit durch kontinuierliche Anwendung des Prozeßhilfsmittels zum Vernebeln in der Luft (Kühiturm, Kühl-/Transportstrecke), wobei sich die Anzahl der Schimmelpilze in der Luft erheblich reduziert. Eine chemische Konservierung oder Pasteurisierung der Backwaren ist nicht mehr notwendig.

### Beispiele 6 bis 12

In den nächsten Beispielen wurden folgende Materialien und Methoden eingesetzt:

| Material und Methoden: | | | |
|---|---|---|---|
| 1. | Testorganismen | E.coli | ATCC11229 |
| | | Staph.aureus | ATCC6538 |
| | | Ps.aeruginosa | ATCC15442 |
| | | C.albicans | ATCC10231 |
| | | A.niger | ATCC16404 |
| | | Cladosporium herbarum (Eigenisolat) | |
| 2. | Nährböden | CSA (Tryptone Soya Agar Oxoid CM 131) | |
| | | CSB (Tryptone Soya Broth Oxoid CM 129) | |
| | | YGC agar (Merck 16000) | |
| | | Tween 80 (Merck) | |

### 3. Durchführung der Tests

### 3.1. In-vivo-Test zur Bestimmung der Mindesthaltbarkeit

Die Pilze und Bakterien werden mit einem Swab (Wattetupfer) aufgenommen (mit drehenden Bewegungen uber die Bewegungen über die bewachsene Platte streichen) und gleichmaßig z.B. über die Schnittfläche einer geschnittenen Brotprobe gestrichen, so daß so daß eine Konzentration von 10³ - 10⁴ Sporen bzw. Mikroorganismen pro 100 cm² erreicht wird.

0,2-0,3 ml des Testmittels werden mit einem Aerosolsprays auf 100 cm² Schnittbrotfläche gesprüht. Die Testbrote werden in Plastikbeutel (Polyethylen oder Polypropylen) verpackt, die Plastikbeutel geschlossen und bei Zimmertemperatur im Licht aufbewahrt.

Das Wachstum von Mikroorganismen auf den kontaminierten Broten wird mit dem auf Kontrollbrot verglichen. Als Mindesthaltbarkeit gilt die Anzahl von Tagen, nach der erstmals mit bloßem Auge ein Wachstum von Mikroorganismen erkannt werden kann.
¹⁾ Deutsche Gesellschaft für Hygiene und. Mikrobiolgie; Richtlinien für die Prüfung und Bewertung chemischer Desinfektionsverfahren. Zentralblatt für Bakteriologie, Mikrobiologie und Hygiene Reihe B, Band 172, Heft 6 (1981)

### 3.2. In-vitro-Test- Quantitatives Suspensionsverfahren gemäß DGHM I 2.3.1.¹⁾

Übemachtkulturen (oder im Falle von z.B. A. niger und C. albicans 3 Tage Kulturen) werden in physiologischer Salzlösung (0,8%) suspendiert, bis die gewünschte Konzentration (10⁶ Pilze/ml bzw. 10⁸ Bakterien/ml)erreicht ist. Danach wird 1 ml der Suspension in 9 ml des Testmittels überimpft.

Für Keime wie Staph. aureus, Pseudomonas und E. coli wird eine Einwirkzeit von 5 min. bis 1 Stunde, für A. niger und C. albicans eine Einwirkzeit von 1,6 und 24 Stunden gewählt. Während der Einwirkzeit wird regelmäßig geschüttelt.

Nach Ablauf der Einwirkzeit wird eine Verdünnungsreihe der Testsuspensionen in CSB (Oxoid), enthaltend den o. die jeweils getesteten Aromastoff(e) inaktivierende Substanzen, angelegt. Zur Inaktivierung von Aldehyden wird beispielsweise 0,1 Gew.-% Histidin zugefügt, zur Inaktivierung von Phenolen 1 Gew.-% Tween 80^{R}, zur Inaktivierung von Alkoholen 0,2 Gew.-% Tween^{R} und zur Inaktivierung von Säuren, Estem u.a. 0,03 Gew.-% Lecithin. Bei Bakterien wird 1 ml von jeder Verdünnung mit CSA (Oxoid) übergossen, bei A. niger/C. albicans mit YGC Agar (Merck).

Nach 24-48 Stunden Bebrütung werden die Platten ausgewertet und der Abtötungsfaktor als Reduktionsfaktor (RF) im Verhältnis zu einer Wachstumskontrolle von 10⁵-10⁷ KBE/ml bestimmt.

### 3.3 Gasphasen-Testverfahren

Das Gasphasen-Testverfahrendient der Bestimmung des Abtötungsfaktors bei Verwendung von gasphasenaktiver Prozeßhilfsmitteln.

Die Bestimmung wird in einer sogenannten zweifachen Petrischale durchgeführt. Auf eine absorbierende Oberfläche, z.B. Brot oder Hamstoff/Formaldehydschaumblöckchen (0,5 x 1 x 3 cm) werden 0,5 ml des gasphasenaktiven Mittels gegeben. Das Brot oder das Schaumblöckchen werden in ein Kompartiment einer unterteilten Petrischale gelegt.

In ein anderes Kompartiment der gleichen Petrischale wird eine mit ca. 10⁸ bis 10⁹ Keimen beimpfte Filterpapierscheibe (Durchmesser: 13 mm) gelegt. Die Schale wird luftdicht verschlossen und 24 Stunden bei einer Temperatur von 30 °C bebrütet.

Im Anschluß an die Inkubation wird die Filterpapierscheibe in 9 ml CSB suspendiert und eine Verdünnungsreihe in CSB hergestellt. Die Röhrchen werden bei 30 °C bebrütet und ausgewertet. Der Abtötungsfaktor wird im Vergleich mit einer Kontrolle bestimmt.

### 3.4 Gasphasensuspensionsverfahren

Mit dem Gasphasensuspensionsverfahren wird eine erste Untersuchung aut bakterizide und/oder fungizide Eigenschaften durchgeführt.

Zur Durchführung des Verfahrens werden dem jeweiligen Testmikroorganismus entsprechende geschmolzene Nährböden mit 10⁵ bis 10⁶ Keimen pro ml beimpft. Die Nährböden werden in Petrischalen gegossen und abgekühlt.

80 µl des zu testenden Mittels (Additiv oder Prozeßhilfsmittel) werden auf eine Filterpapierscheibe (Durchmesser 13 mm; Schleicher & Schüll, Artikel 601/2) aufgetragen, und vier der so präparierten Filter gleichmäßig auf der Oberfläche einer präparierten Petrischale verteilt. Anschließend werden die Platten 24 Stunden bei 37 °C inkubiert.
Nach der Inkubation wird die Größe des eventuell auftretenden Hemmbereiches bestimmt.

### 3.5 Konservierungstest

Der Konservierungstest wurde gemäß USP XXII/NF XVII, US Pharmacopeia, United States Pharmacopeial Convention, Rockville, MD 20852, bestimmt

Im folgenden werden beispielhafte Prozeßhilfsmittel vorgestellt:

| | |
|---|---|
| Beispiel: | 6 Schneidmittel |
| | 7 Wärme-Kälte-Übertragungsmittel |
| | 8 Emulgier-, Trenn-, Reinigungsmittel |
| | 9 Schmiermittel |
| | 10 Gasphasenaktives Mittel |
| | 11 Vernebelungsmittel |
| | 12 Sprühmittel |

Die Prozeßhilfsmittel werden entweder unverdünnt angewendet oder nach einer Verdünnung mit Wasser und/oder lebensmittelzulässigen Lösemitteln und/oder Pflanzen-(Fett)Ölen und/oder Emulgatoren von 0,01 Gew.-% bis 99,99 Gew.-% angewendet, bevorzugt in einem Mischungsverhältnis von 1 : 1 bis 1 : 100.

Einige Anwendungsbeispiele für den Einsatz eines oder mehrerer Prozeßhilfsmittel zur Haltbarkeitsstabilisierung und/oder Verbesserung und/oder Umfeldbeaufschlagung bei z.B.:

| | Awendung Prozeßhilfsmittel | Beispiel Nr.: |
|---|---|---|
| Toastbrot | Vernebelungsmittel | 11 |
| | Schneidmittel | 6 |
| | Sprühmittel | 12 |
| Feingebäck | Vernebelungsmittel | 11 |
| Schnittwurst | Schneidmittel | 6 |
| | Emulgier-, Trenn-, Reinigungsmittel | 8 |
| Bratwurst | Sprühmittel | 12 |
| Heizkesselwasser zur Schokoladenmassenerwärmung | Wärme-, Kälte-, Übertragungsmittel | 7 |
| Förderband | Schmiermittel | 9 |
| Abfallbehälter | Gasphasenaktives Mittel | 10 |

Folgende Rezepturbeispiele 1 - 2 sind repräsentative Beispiele der Aroma-Funktionsgruppen einzeln oder mehrere untereinander und/oder synergistisch kombiniert.

| Funktionsgruppe | | Aroma FDA | Beispiel Gew.-% |
|---|---|---|---|
| 1 | Alkohol- | Benzylalkohol- | 77 |
| | Phenol- | Isoeugenol- | 18 |
| | Säure | Fumarsäure | 5 |
| 2 | Terpen- | Limonen | 42 |
| | Ester- | Allicin | 15 |
| | Alkohol- | Benzylalkohol | 25 |
| | Aldehyd | Vanillin | 18 |

## Patentansprüche

1. Verfahren zur Haltbarkeitsverbesserung und/oder Stabilisierung von mikrobiell verderblichen Produkten, bei dem vor, nach oder während des Prozesses zur Herstellung, Verarbeitung oder Verpackung der Produkte deren Oberflächen und/oder deren Umgebung, insbesondere die Umgebungsluft und/oder die Oberflächen der unmittelbar oder mittelbar mit den Produkten in Kontakt kommenden Geräte oder sonstigen Materialien mit einem oder mehreren Prozesshilfsmitteln beaufschlagt werden, **dadurch gekennzeichnet, dass** das Prozesshilfsmittel eine mikrobizide Zusammensetzung ist, die Benzylalkohol und wenigstens einen weiteren mikrobizid wirkenden GRAS (Generally Recognized As Safe)-Aromastoff umfaßt, wobei der GRAS-Aromastoff ausgewählt ist aus:
(1) Alkoholen, ausgewählt aus Acetoin, Ethanol, 1-Propanol, 2-Propanol, Propylenglykol, Glycerin, n-Butylalkohol, iso-Butylalkohol, Hexylalkohol, L-Menthol, Octylalkohol, Zimtalkohol, Heptylalkohol, 1-Pentanol, 3-Methyl-1-butanol, Anisalkohol, Citronellol, n-Decanol, Geraniol, 3-Hexenol, Linalool, Nerolidol, 2,6-Nonadien-1-ol, Nonylalkohol, Rhodinol, Terpineol, Bomeol, Clineol, Cuminylalkohol, 10-Undecen-1-ol und 1-Hexadecanol;
(2) Aldehyden, ausgewählt aus Acetaldehyd, Anisaldehyd, Benzaldehyd, Methyl-1-propanal, Citral, Citronellal, n-Decanal, Ethylvanillin, Fufural, Helioptropin, Heptanal, Hexanal, 2-Hexenal, 3-Phenyl-1-propanal, Dodecanal, Nonylaldehyd, Octylaldehyd, Phenylacetaldehyd, Propanal, Vanillin, Zimtaldehyd, Perillaaldehyd und Cuminaldehyd;
(3) Phenolen, ausgewählt aus Thymol, Methyleugenol, Acetyleugenol, Safrol, Eugenol, Isoeugenol, Anethol, Phenol, Methylchavicol, Carvacrol, α-Bisabolol, Fomesol, Anisol und Propenylguaethol;
(4) Acetaten, ausgewählt aus iso-Amylacetat, Benzylacetat, Benzylphenylacetat, n-Butylacetat, Cinnamylacetat, Citronenllylacetat, Ethylacetat, Eugenolacetat, Geranylacetat, Hexylacetat, Hydrocinnamylacetat, Linalylacetat, Octylacetat, Phenylethylacetat, Terpinylacetat, Triacetin, Kaliumacetat, Natriumacetat und Calciumacetat;
(5) Säuren, ausgewählt aus Essigsäure, Aconitsäure, Adipinsäure, Ameisensäure, Apfelsäure, Capronsäure, 3-Phenyl-1-propionsäure, Nonansäure, Milchsäure, Phenoxyessigsäure, Phenylessigsäure, Valeriansäure, iso-Valeriansäure, Zimtsäure, Citronensäure, Mandelsäure, Weinsäure, Fumarsäure, Tanninsäure und/oder deren physiologisch verträglichen Salze;
(6) Allicin;
(7) Terpenen, ausgewählt aus Campher, Limonen und β-Caryophyllen;
(8) Acetalen, ausgewählt aus Acetal, Acetaldehyddibutylacetal, Acetaldehyddipropylacetal, Acetaldehydphenethrylpropylacetal, Zimtaldehydethylenglycolacetal, Decanaldimethylacetal, Heptanaldimethylacetal, Heptanalglycerylacetal und Benzaldehydpropylenglykolacetal;
(9) Polyphenole; und
(10) etherischen Ölen und/oder alkoholischen, glykolischen oder durch CO₂-Hochdruckverfahren erhältliche Extrakte aus den im folgenden aufgeführten Pflanzen:
(a) Öle bzw. Extrakte mit hohem Anteil an Alkoholen: Melisse, Koriander, Kardamon, Eukalyptus;
(b) Öle bzw. Extrakte mit hohem Anteil an Aldehyden: Eukalyptus citriodora, Zimt, Zitrone, Lemongras, Melisse, Cintronella, Limette, Orange;
(c) Öle bzw. Extrakte mit hohem Anteil an Phenolen: Oreganum, Thymian, Rosmarin, Orange, Nelke, Fenchel, Campher, Mandarine, Anis, Cascarille, Estragon und Piment;
(d) Öle bzw. Extrakte mit hohem Anteil an Acetaten: Lavendel;
(e) Öle bzw. Extrakte mit hohem Anteil an Estem: Senf, Zwiebel, Knoblauch;
(f) Öle bzw. Extrakte mit hohem Anteil an Terpenen: Pfeffer, Pomeranze, Kümmel, Dill, Zitrone, Pfefferminz, Muskatnuß.

2. Verfahren nach Anspruch 1, **dadurch gekennzeichnet, dass** das Prozesshilfsmittel eine mikrobizide Wirkungszeit von weniger als 24 Stunden, vorzugsweise weniger als 12 Stunden, aufweist.

3. Verfahren nach Anspruch 2, **dadurch gekennzeichnet, dass** die mikrobizide Wirkungszeit der Prozesshilfsmittel unter 1 Stunde, vorzugsweise 15 Minuten, liegt.

4. Verfahren nach einem oder mehreren der Ansprüche 1 bis 3, **dadurch gekennzeichnet, dass** die Beaufschlagung mit dem Prozesshilfsmittel zum Zwecke des Aufstreichens, Schmierens, Emulgierens, Trennens, Reinigens, Sprühens, Vemebelns, Vergasens und Schneidens erfolgt.

5. Verfahren nach einem oder mehreren der Ansprüche 1 bis 4, **dadurch gekennzeichnet, dass** das Prozesshilfsmittel mehr als 50 Gew.-% Benzylalkohol enthält.

6. Verfahren nach einem oder mehreren der Ansprüche 1 bis 4, **dadurch gekennzeichnet, dass** das Prozesshilfsmittel weniger als 50 Gew.-%, vorzugsweise weniger als 30 Gew.-%, besonders bevorzugt weniger als 20 Gew.-% Benzylalkohol oder eines Gemisches aus Benzylalkohol mit Ethanol und/oder 2-Propanol enthält.

7. Verfahren nach einem oder mehreren der Ansprüche 1 - 6, **dadurch gekennzeichnet, dass** der Anteil der Aromastoffe im Prozesshilfsmittel 0,05 bis 100 Gew.-% beträgt.

8. Verfahren nach Anspruch 7, **dadurch gekennzeichnet, dass** der Anteil der Aromastoffe im Prozesshilfsmittel 100 Gew.-% beträgt.

9. Mikrobizide Zusammensetzung, enthaltend Benzylalkohol und wenigstens einen weiteren mikrobiziden GRAS-Aromastoff, wie in den Ansprüchen 1 bis 8 definiert.

10. Verwendung eines Prozesshilfsmittels, wie in den Ansprüchen 1 bis 8 definiert, zum Beaufschlagen von Oberflächen mikrobiell verderblicher Produkte und/oder deren Umgebung zum Zwecke des Aufstreichens, Schmierens, Emulgierens, Trennens, Reinigens, Sprühens, Vemebelns, Vergasens und Schneidens.

## Claims

1. A method for the improvement of the keeping quality and/or stabilization of microbially perishable products, wherein the surfaces of the products and/or their environment, especially the ambient air and/or the surfaces of the equipment or other materials immediately or mediately contacting the products, are treated with one or more processing aids prior to, during or after the process for the manufacturing, processing or packaging of the products, **characterized in that** said processing aid is a microbicidal composition which comprises benzyl alcohol and at least one additional microbicidally active GRAS (generally recognized as safe) flavoring agent, wherein said GRAS flavoring agent is selected from:
(1) alcohols selected from acetoin, ethanol, 1-propanol, 2-propanol, propylene glycol, glycerol, n-butyl alcohol, iso-butyl alcohol, hexyl alcohol, L-menthol, octyl alcohol, cinnamyl alcohol, heptyl alcohol, 1-pentanol, 3-methyl-1-butanol, anisic alcohol, citronellol, n-decanol, geraniol, 3-hexenol, linalool, nerolidol, 2,6-nonadiene-1-ol, nonyl alcohol, rhodinol, terpineol, borneol, clineol, cuminyl alcohol, 10-undecene-1-ol, and 1-hexadecanol;
(2) aldehydes selected from acetaldehyde, anisic aldehyde, benzaldehyde, methyl-1-propanal, citral, citronellal, n-decanal, ethylvanillin, furfural, heliotropin, heptanal, hexanal, 2-hexenal, 3-phenyl-1-propanal, dodecanal, nonyl aldehyde, octyl aldehyde, phenylacetaldehyde, propanal, vanillin, cinnamic aldehyde, perillaldehyde, and cuminaldehyde;
(3) phenols selected from thymol, methyleugenol, acetyleugenol, safrol, eugenol, isoeugenol, anethole, phenol, methylchavicol, carvacrol, α-bisabolol, fornesol, anisole, and propenylguaethol;
(4) acetates selected from iso-amyl acetate, benzyl acetate, benzylphenyl acetate, n-butyl acetate, cinnamyl acetate, citronellyl acetate, ethyl acetate, eugenol acetate, geranyl acetate, hexyl acetate, hydrocinnamyl acetate, linalyl acetate, octyl acetate, phenylethyl acetate, terpinyl acetate, triacetin, potassium acetate, sodium acetate, and calcium acetate;
(5) acids selected from acetic acid, aconitic acid, adipic acid, formic acid, malic acid, capronic acid, 3-phenyl-1-propionic acid, nonanoic acid, lactic acid, phenoxyacetic acid, phenylacetic acid, valeric acid, iso-valeric acid, cinnamic acid, citric acid, mandelic acid, tartaric acid, fumaric acid, tannic acid, and/or their physiologically acceptable salts;
(6) allicin;
(7) terpenes selected from camphor, limonene, and β-caryophyllene;
(8) acetals selected from acetal, acetaldehyde dibutyl acetal, acetaldehyde dipropyl acetal, acetaldehyde phenethyl propyl acetal, cinnamic aldehyde ethylene glycol acetal, decanal dimethyl acetal, heptanal dimethyl acetal, heptanal glyceryl acetal, and benzaldehyde propylene glycol acetal;
(9) polyphenols; and
(10) essential oils and/or alcoholic or glycolic extracts or extracts obtained by CO₂ high pressure methods from the plants listed below:
(a) oils or extracts having a high content of alcohols: melissa, coriander, cardamon, eucalyptus;
b) oils or extracts having a high content of aldehydes: Eucalyptus citriodora, cinnamon, lemon, lemon grass, melissa, citronella, lime, orange;
(c) oils or extracts having a high content of phenols: origanum, thyme, rosemary, orange, clove, fennel, camphor, mandarin, anise, cascarilla, estragon and pimento;
(d) oils or extracts having a high content of acetates: lavender;
(e) oils or extracts having a high content of esters: mustard, onion, garlic;
(f) oils or extracts having a high content of terpenes: pepper, bitter orange, caraway, dill, lemon, peppermint, nutmeg.

2. The method according to claim 1, **characterized in that** said processing aid has a microbicidal activity period of less than 24 hours, preferably less than 12 hours.

3. The method according to claim 2, **characterized in that** the microbicidal activity period of said processing aids is below 1 hour, preferably 15 minutes.

4. The method according to one or more of claims 1 to 3, **characterized in that** said treating with said processing aid is intended for brushing, spreading, emulsifying, separating, cleaning, spraying, nebulizing, volatizing and cutting.

5. The method according to one or more of claims 1 to 4, **characterized in that** said processing aid contains more than 50% by weight of benzyl alcohol.

6. The method according to one or more of claims 1 to 4, **characterized in that** said processing aid contains less than 50% by weight, preferably less than 30% by weight, more preferably less than 20% by weight, of benzyl alcohol or of a mixture of benzyl alcohol and ethanol and/or 2-propanol.

7. The method according to one or more of claims 1 to 6, **characterized in that** the proportion of flavoring agents in said processing aid is from 0.05 to 100% by weight.

8. The method according to claim 7, **characterized in that** the proportion of flavoring agents in said processing aid is 100% by weight.

9. A microblcidal composition containing benzyl alcohol and at least one additional microbicidal GRAS flavoring agent as defined in claims 1 to 8.

10. Use of a processing aid as defined in claims 1 to 8 for treating the surfaces of microbially perishable products and/or their environment for brushing, spreading, emulsifying, separating, cleaning, spraying, nebulizing, volatizing and cutting.

## Revendications

1. Procédé pour améliorer et/ou stabiliser la conservation de produits périssables par voie microbienne, dans lequel, avant, après ou pendant les opérations de fabrication, préparation ou emballage des produits, leurs surfaces et/ou leur environnement, en particulier l'atmosphère environnante et/ou les surfaces des ustensiles entrant directement ou indirectement en contact avec les produits ou d'autres matériels, reçoivent une application d'un ou plusieurs adjuvants de fabrication, caractérisé en cc que l'adjuvant de fabrication est une composition microbicide, renfermant de l'alcool benzylique et au moins un autre aromate microbicide GRAS (Generally Recognized As Safe) dans lequel l'aromate GRAS est choisi parmi:
(1) des alcools choisis parmi l'acétoïne, éthanol, 1-propanol, 2-propanol, propylèneglycol, glycérine, alcool n-butylique, alcool iso-butylique, alcool hexylique, L-menthol, alcool octylique, alcool cinamique, alcool heptylique, I-pentanol, 3-méthyl-1-butanol, alcool anisique, citronellol, n-décanol, géraniol, 3-hcxénol, linalool, nerolidol, 2,6-nonadiène-1-ol, alcool nonylique, rhodinol, terpinéol, bornéol, clinéol, alcool cuminylique, 10-undécène-1-ol et 1-hexadécanol ;
(2) des aldéhydes choisis parmi les acétaldéhyde, anisaldéhyde, benzaldéhyde, méthyl-1-propanol, citral, citronellal, n-décanal, éthylvanilline, fufural, hélioptropine, heptanal, hexanal, 2-hexanal, 3-phényl-1-propanal, dodécanal, nonylaldéhyde, octyladéhyde, phenylacétaldéhyde, propanal, vanilline, aldéhyde cinamique, périllaaldéhyde et cuminaldéhyde ;
(3) des phénols choisis parmi le thymol, méthyleugénol, acétyleugénol, safrol, eugénol, isoeugénol, anéthol, phénol, méthylchavicol, carvacrol, α-bisabolol, fomesol, anisol et propénylguaéthol ;
(4) des acétates choisis parmi l'acétate d'iso-amyle, acétate de benzyle, phényl acétate de benzyle, acétate de n-butyle, acétate de cinnamyle, acétate de citronenllyle, acétate d'éthyle, acétate d'eugénol, acétate de géranyle, acétate d'hexyle, acétate d'hydrocinnamyle, acétate de lynalyle, acétate d'octyle, acétate de phényléthyle, acétate de terpinyle, triacétine, acétate de potassium, acétate de sodium et acétate de calcium ;
(5) des acides choisis parmi l'acide acétique, acide aconitique, acide adipique, acide phormique, acide maléique, acide capronique, acide 3-phényl-1-propionique, acide nonanoïque, acide lactique, acide phénoxyacétique, acide phényl acétique, acide valérianique, acide iso-valérianique, acide cinamique, acide citrique, acide mandélique, acide tartrique, acide fumarique, acide phtanique et/ou leurs sels physiologiquement acceptables ;
(6) l'allicine ;
(7) des terpènes choisis parmi le camphre, le limonène et le β-caryophyllène ;
(8) des acétals choisis parmi l'acétal, acétaldéhydedibutylacétal, acétaldéhyde-dipropylacétal, acétaldéhydepbénéthrylpropylacétal, cinmaldéhyde-éthylèneglycolacétal, décanaldiméthylacétal, heptanaldiméthylacétal, heptanalglycérylacétal et benzaldéhydepropylèneglycolacétal ;
(9) des polyphénols ; et
(10) des extraits d'huiles éthérées et/ou alcooliques, glycoliques ou obtenus par extraction par CO₂ sous haute pression à partir des plantes énumérées ci-après :
(a) huiles ou extraits à forte teneur en alcools : mélisse, coriande, kardamon, eucalyptus ;
(b) huiles ou extraits à forte teneur en aldéhydes : Eukalyptus citriodora, cannelle, citron, limonène, mélisse, citronnelle, limette, orange ;
(c) huiles ou extraits à forte teneur en phénols: orégan, thym, romarin, orange, girofle, fenouille, camphre, mandarine, anis, cascarille, estragon et piment ;
(d) huiles ou extraits à forte teneur en acétates : lavande ;
(e) huiles ou extraits à forte teneur en esters : moutarde, oignon, ail ;
(f) huiles ou extraits à forte teneur en terpènes : poivre, orange, carvi, aneth, citron, menthe poivrée, noix de muscade ;

2. Procédé selon la revendication 1, **caractérisé en ce que** les adjuvants de fabrication présentent un temps d'action microbicide inférieur à 24 heures, de préférence inférieur à 12 heures.

3. Procédé selon la revendication 2, **caractérisé en ce que** le temps d'action microbicide de l'agent de fabrication est inférieur à 1 heure, de préférence inférieure à 15 minutes.

4. Procédé selon l'une ou plusieurs des revendications 1 à 3, **caractérisé en ce que** l'on effectue l'application des adjuvants de fabrication à des fins d'étalement, lubrification, émulsification, séparation, nettoyage, pulvérisation, nébulisation, vaporisation, et découpe.

5. Procédé selon l'une ou plusieurs des revendications 1 à 4, **caractérisé en ce que** l'adjuvant de fabrication renferme plus de 50 % en poids d'alcool benzylique.

6. Procédé selon l'une ou plusieurs des revendications 1 à 4, **caractérisé en ce que** l'adjuvant de fabrication renferme moins de 50 % en poids, de préférence moins de 30 % en poids, de manière plus particulièrement préférée moins de 20 % en poids d'alcool benzylique ou d'un mélange d'alcool benzylique et d'éthanol et/ou de 2-propanol.

7. Procédé selon l'une ou plusieurs des revendications 1 à 6, **caractérisé en ce que** la proportion d'aromates dans l'adjuvant de fabrication s'élève entre 0,05 et 100 % en poids.

8. Procédé selon la revendication 7, **caractérisé en ce que** la proportion d'aromates dans l'adjuvant de fabrication est de 100 % en poids.

9. Composition microbicide renfermant de l'alcool benzylique et au moins un autre aromate GRAS microbicide, tel que défini selon les revendications 1 à 8.

10. Utilisation d'un adjuvant de fabrication selon l'une quelconque des revendications 1 à 8 pour l'application sur des surfaces de produits périssables par voie microbienne et/ou leur environnement à des fins d'étalement, lubrification, émulsification, séparation, nettoyage, pulvérisation, nébulisation, vaporisation et découpe.
